# EUROPÄISCHE PATENTSCHRIFT

(11) **EP 3 750 717 B1**
(45) Veröffentlichungstag und Bekanntmachung des Hinweises auf die Patenterteilung: **25.08.2021**
(21) Anmeldenummer: 20189969.7
(22) Anmeldetag: 05.01.2016
(51) Int. Cl.: B42D 25/324, B42D 25/328

(54) **VERFAHREN ZUR HERSTELLUNG EINES SICHERHEITSELEMENTS SOWIE EIN SICHERHEITSELEMENT**
METHOD FOR MANUFACTURING A SECURITY ELEMENT AND A SECURITY ELEMENT
PROCÉDÉ DE FABRICATION D'UN ÉLÉMENT DE SÉCURITÉ AINSI QU'UN ÉLÉMENT DE SÉCURITÉ

(30) Priorität: 09.01.2015 DE 102015100280
(43) Veröffentlichungstag der Anmeldung: 16.12.2020
(62) Teilanmeldung aus: 16700327.6
(73) Patentinhaber: OVD Kinegram AG, 6300 Zug (CH)
(72) Erfinder: MADER, Sebastian, 6340 Baar (CH); TOMPKIN, Wayne Robert, verstorben (CH); SCHILLING, Andreas, 6332 Hagendorn (ZG) (CH)
(74) Vertreter: Louis Pöhlau Lohrentz

(56) Entgegenhaltungen:
- WO-A1-90/08338
- WO-A1-2004/049250
- WO-A1-2011/044704
- DE-A1-102009 056 934
- DE-A1-102010 025 775
- DE-A1-102012 020 257
- OSTROMOUKHOV V ET AL: "ARTISTIC SCREENING", SIGGRAPH 95 CONFERENCE PROCEEDINGS : AUGUST 6 - 11, 1995, [LOS ANGELES, CALIFORNIA]; [COMPUTER GRAPHICS PROCEEDINGS (SIGGRAPH)], ACM, NEW YORK, NY, USA, 6. August 1995 (1995-08-06), Seiten 219-228, XP000546231, ISBN: 978-0-89791-701-8

## Beschreibung

Die Erfindung betrifft ein Verfahren zur Herstellung von Sicherheitselementen, sowie ein Sicherhetselement.

Ein gattungsgemäßes Verfahren ist aus der DE 10 2009 056934 A1 bekannt. Dort ist zur Herstellung eines Sicherheitselements beschrieben, dass ein Oberflächenprofil beschrieben durch eine Funktion F(x, y) bestimmt wird und eine Mikrostruktur derart bestimmt wird, dass durch die Mikrostruktur eine optische Wahrnehmung erreicht wird, welche dem von der Funktion F(x, y) beschriebenen Oberflächenprofil entspricht und die Mikrostruktur in eine Schicht des Sicherheitselements derart eingebracht wird, dass von der Mikrostruktur der Schicht des Sicherheitselements für den Betrachter die entsprechende optische Wahrnehmung erreicht wird.

Optisch wirksame Sicherheitselemente werden insbesondere auf Sicherheitsdokumenten wie etwa Banknoten, Pässen, Ausweisen, Scheckkarten, Kreditkarten, Visa oder Zertifikaten sowohl für informative als auch für dekorative Zwecke eingesetzt. Derartige Sicherheitselemente erhöhen einerseits den Fälschungsschutz beispielsweise gegenüber modernen Farbkopierern und anderen Reproduktionssystemen und sind andererseits für den Laien leicht und eindeutig erkennbar, sodass der Laie die Echtheit eines mit einem derartigen Sicherheitselement ausgestatteten Sicherheitsdokument eindeutig bestimmen kann und somit Fälschungen oder Manipulationen erkennen kann.

Zu diesem Zweck können Sicherheitselemente Licht beugende, diffraktive Strukturen wie beispielsweise Hologramme aufweisen. Für den Laien besonders beeindruckende und daher einprägsame optische Effekte werden insbesondere durch für einen Betrachter räumlich wirkende Darstellungen, welche beispielsweise durch Transmissions-Hologramme erzeugt werden, hervorgerufen. Derartige Hologramme haben jedoch den Nachteil, dass die von diesen erzeugte räumliche Darstellung eines Objekts eine starke Abhängigkeit von den Beleuchtungsbedingungen aufweist und hierdurch, insbesondere unter nicht idealen Beleuchtungsverhältnissen wie beispielsweise überwiegend diffuses Tageslicht, häufig eine mangelhafte Brillanz aufweisen. So müssen beispielsweise derartige Hologramme zur scharfen dreidimensionalen Darstellung eines Objekts mit einer monochromatischen Punktlichtquelle, wie beispielsweise einem Laserpointer, beleuchtet werden. Weiter erfordern derartige Hologramme für die Herstellung der für eine Replikation in entsprechende Schichten erforderlichen Master einen vergleichsweise großen apparativen Aufwand. Auch besteht im Allgemeinen keine Möglichkeit, die Attraktivität eines entsprechenden optisch variablen Elements dadurch zu steigern, dass zusätzlich bestimmte Farbeffekte bzw. Farbwahrnehmungen erzielt werden.

Die WO 2011/044704 A1 beschreibt ein Verfahren zur Herstellung von Sicherheitsdokumenten. Die WO 2004/049250 A1 beschreibt eine Schichtanordnung, insbesondere für Transfer- oder Laminierfolien.

Der Erfindung liegt nun die Aufgabenstellung zugrunde, ein Verfahren zur Herstellung eines optisch variablen Sicherheitselements sowie ein optisch variables Sicherheitselement bereitzustellen, so dass von dem optisch variablen Sicherheitselement ein verbessertes, dreidimensional wirkendes, optisches Erscheinungsbild erzielt wird.

Diese Aufgabe wird erfindungsgemäß durch ein Verfahren nach Anspruch 1 und ein Sicherheitselement nach Anspruch 4 gelöst.

Weiter wird diese Aufgabe von einem Sicherheitsdokument, insbesondere einer Banknote, einem Ausweisdokument, einem Visum, einem Wertpapier oder einer Kreditkarte, mit mindestens einem Sicherheitselement nach einem der Ansprüche 4 bis 9 gelöst. Diese Aufgabe wird auch erfindungsgemäß gelöst von einer Transferfolie mit mindestens einem Sicherheitselement nach einem der Ansprüche 4 bis 9, wobei das mindestens eine Sicherheitselement auf einer Trägerfolie der Transferfolie ablösbar angeordnet ist. Weiter wird diese Aufgabe auch erfindungsgemäß gelöst von einer Laminierfolie mit mindestens einem Sicherheitselement nach einem der Ansprüche 4 bis 9, wobei das mindestens eine Sicherheitselement in die Laminierfolie inkorporiert ist.

Hierbei hat sich gezeigt, dass mittels eines derartigen Verfahrens hergestellte Sicherheitselemente besonders kostengünstig und durch großindustrielle Prozesse herstellbar sind. Weiter hat sich gezeigt, dass mit derartigen Sicherheitselementen ein optisch variabler Effekt generieren lässt, welcher sich für den menschlichen Betrachter von den vorgenannten Verfahren nach dem Stand der Technik erzielbaren optisch variablen Effekten unterscheidet. So wird von derartigen Sicherheitselementen ein optisch variabler Effekt derart erzeugt, dass das von der Funktion F(x,y) beschriebene Oberflächenprofil für einen Betrachter dreidimensional erscheint. Insbesondere erscheint das von der Funktion F(x,y) beschriebene Oberflächenprofil gegenüber der zweidimensionalen Referenzfläche so, als ob das Oberflächenprofil vorgewölbt wäre und/oder zurückspringen würde, beispielsweise so, als ob eine real gewölbte Oberfläche vorhanden wäre. So wird durch die erste Mikrostruktur erreicht, dass das von der Funktion F(x,y) beschriebene Oberflächenprofil als vor- und/oder zurückspringende Fläche für einen Betrachter wahrnehmbar ist. So ist es möglich, dass Portraits, Gegenstände, Motive oder sonstige dreidimensional erscheinende Objekte nachzustellen. So lassen sich besonders charakteristische optische Effekte erzielen, welche den Wiedererkennungswert und die Fälschungssicherheit derartiger Sicherheitselemente stark erhöhen. Weiter erscheinen von derartigen Sicherheitselementen hervorgerufene optische variable Effekte brillanter im Vergleich zu Effekten, welche von holographisch hergestellten Strukturen hervorgerufen werden, da derartige Mikrostrukturen mit hoher Genauigkeit erzeugt werden können. Weiter hat sich gezeigt, dass mit dem erfindungsgemäßen Verfahren besonders flache Sicherheitselemente erzeugt werden können, welche für einen Betrachter einen dreidimensionalen optischen Eindruck, d.h. einen gewölbten und insbesondere nicht flachen optischen Eindruck erzeugen. Weiter wird durch derartige Sicherheitselemente der Vorteil erreicht, dass für einen Betrachter ein visuell kombinierter optischer Eindruck einer räumlichen, dreidimensionalen Wahrnehmung eines ersten Objekts mit einer gleichzeitigen mehrfarbigen Darstellung des ersten Objekts erreicht wird. Hierdurch wird die Wiedererkennbarkeit, die Erkennungsrate und der Fälschungsschutz, insbesondere für Laien, erhöht, da sich besonders einprägsame und insbesondere besonders natürlich wirkende optische Effekte erzielen lassen.

Bei der Wahrnehmung für einen Betrachter, welche dem von der Funktion F(x,y) beschriebenen Oberflächenprofil des dreidimensionalen Objekts entspricht, erscheint das von der Funktion F(x,y) beschriebene Oberflächenprofil des dreidimensionalen Objekts gegenüber der zweidimensionalen Referenzfläche so, als ob das Oberflächenprofil vorgewölbt wäre und/oder zurückspringen würde, d.h. so als ob eine dreidimensional gewölbte Oberfläche vorhanden wäre. So wird durch die erste Mikrostruktur erreicht, dass das von der Funktion F(x,y) beschriebene Oberflächenprofil des dreidimensionalen Objekts als vor- und/oder zurückspringende Fläche für einen Betrachter wahrnehmbar ist. So kann durch die beugungsoptisch wirksame erste Mikrostruktur beispielsweise bei entsprechend linsenartiger Ausgestaltung ein Vergrößerungseffekt, ein Verkleinerungseffekt und/oder ein Verzerrungseffekt erzeugt werden. Ebenso erscheint für einen Betrachter bei der räumlichen Wahrnehmung eines ersten Objekts die Oberfläche des ersten Objekts als ob eine entsprechend gewölbte Oberfläche vorhanden wäre.

Der Abstand zwischen dem von der Funktion F(x,y) beschriebenen Oberflächenprofil des dreidimensionalen Objekts und einer von den Koordinatenachsen x und y aufgespannten zweidimensionalen Referenzfläche an den Koordinatenpunkten x und y beschreibt hier die Differenz entlang einer Senkrechten zur der von den Koordinatenachsen x und y aufgespannten Referenzfläche zwischen dem von der Funktion F(x,y) beschriebenen Oberflächenprofil des dreidimensionalen Objekts an den Koordinatenpunkten x und y und der zweidimensionalen Referenzfläche an denselben Koordinatenpunkten x und y. Der Abstand wird somit entlang der z-Achse, welche der Normalen zu der von den Koordinatenachsen x und y aufgespannten Referenzfläche entspricht, bestimmt.

Unter zweidimensionaler Referenzfläche wird hierbei eine flache und/oder eine gekrümmte Referenzfläche verstanden. So ist es möglich, dass die zweidimensionale Referenzfläche flach bzw. plan ausgeformt ist. Weiter ist es möglich, dass die zweidimensionale Referenzfläche gekrümmt, beispielsweise in Form eines Kreisbogens, ausgeformt ist. Weiter ist es auch möglich, dass die zweidimensionalen Referenzfläche bereichsweise flach ist und bereichsweise gekrümmt ist. Durch eine Vorkompensation, welche eine gekrümmte Oberfläche, auf welche das Sicherheitselement appliziert werden soll, berücksichtigt, ist es möglich, das Sicherheitselement auf die gekrümmte Oberfläche, insbesondere eines gewölbten Substrats, zu applizieren, wobei die erste optische Wahrnehmung und/oder die zweite optische Wahrnehmung optisch unverzerrt ähnlich einem entsprechenden Sicherheitselement auf einer flachen Oberfläche, insbesondere einem planen Substrat, dargestellt wird.

Je nach Ausgestaltung der zweiten Mikrostruktur ist es möglich, dass die zweite optische Wahrnehmung des ersten Objekts für den Betrachter in Abhängigkeit von den Betrachtungsbedingungen gleichzeitig mit der ersten optischen Wahrnehmung des ersten Objekts wahrnehmbar ist. Ist die zweite optische Mikrostruktur so beispielsweise ein Echtfarbenhologramm, so ist dessen Wahrnehmung für den Betrachter abhängig den Betrachtungsbedingungen.

Unter dem Begriff Betrachtungsbedingungen wird hierbei sowohl der Betrachtungswinkel, unter dem das Sicherheitselement von einem Betrachter betrachtet wird, als auch der Winkel, unter dem das Sicherheitselement von einer Beleuchtungseinrichtung beleuchtet wird, verstanden. Weiter werden unter dem Begriff Betrachtungsbedingungen auch die Beleuchtungsbedingungen, wie beispielsweise diffuses Tageslicht oder eine Punktlichtquelle, verstanden. Als Betrachtungswinkel wird der zwischen der Flächennormale der von der Unterseite des Sicherheitselements aufgespannten Ebene und der Betrachtungsrichtung eines Beobachters eingeschlossene Winkel verstanden. Ebenso wird als Betrachtungswinkel der zwischen der Flächennormale der von der Unterseite des Sicherheitselements aufgespannten Ebene und der Beleuchtungsrichtung einer Beleuchtungseinrichtung eingeschlossene Winkel verstanden. So blickt beispielsweise ein Betrachter unter dem Betrachtungswinkel von 0° senkrecht auf die Oberfläche des Sicherheitselements und bei einem Betrachtungswinkel von 70° blickt ein Betrachter unter einem flachen Winkel auf das Sicherheitselement. Ändert sich die Betrachtungsrichtung des Beobachters und/oder die Beleuchtungsrichtung der Beleuchtungseinrichtung und/oder die Beleuchtungsbedingungen ändern sich folglich die Betrachtungsbedingungen.

Weitere vorteilhafte Ausgestaltungen der Erfindung sind in den Unteransprüchen bezeichnet.

Vorzugsweise beträgt der Anteil der ein oder mehreren ersten Zonen an der Gesamtfläche bestehend aus den ein oder mehreren ersten Zonen und den ein oder mehreren zweiten Zonen zwischen 10% und 90%, bevorzugt zwischen 30% und 70% und weiter bevorzugt zwischen 45% und 55%. Hierdurch ist es möglich, die erste optische Wahrnehmung und die zweite optische Wahrnehmung für den Betrachter entsprechend zu gewichten. So hat sich gezeigt, dass ein Anteil der ein oder mehreren ersten Zonen an der Gesamtfläche bestehend aus den ein oder mehreren ersten Zonen und den ein oder mehreren zweiten Zonen von jeweils 50% für einen Betrachter besonders einprägsame Kombinationseffekte der ersten optischen Wahrnehmung und der zweiten optischen Wahrnehmung ergeben.

Gemäß der Erfindung ist die erste Mikrostruktur in einer Schicht des Sicherheitselements derart ausgeformt, dass die Strukturhöhe der ersten Mikrostruktur auf einen vorbestimmten Wert kleiner als der maximale Abstand zwischen einem von einer Funktion F(x,y) beschriebenen Oberflächenprofil eines dreidimensionalen Objekts und einer von Koordinatenachsen x und y aufgespannten zweidimensionalen Referenzfläche begrenzt wird, wobei die Funktion F(x,y) den Abstand zwischen dem Oberflächenprofil und der zweidimensionalen Referenzfläche an den Koordinatenpunkten x und y beschreibt, und dass die durch die erste Mikrostruktur für den Betrachter erreichte erste optische Wahrnehmung dem von der Funktion F(x,y) beschriebenen Oberflächenprofil des dreidimensionalen Objekts entspricht.

Vorzugsweise umfasst das von der Funktion F(x,y) beschriebene Oberflächenprofil ein oder mehrere alphanumerische Zeichen, geometrische Figuren, Portraits und/oder sonstige Objekte oder Motive.

Vorteilhafterweise ist die erste Mikrostruktur derart ausgeformt, dass die erste Mikrostruktur eine Ablenkung von einfallendem Licht in dieselben Richtungen bewirkt, in die das von der Funktion F(x,y) beschriebene Oberflächenprofil einfallendes Licht ablenkt. Hierdurch wird erreicht, dass für den Betrachter eine erste optische Wahrnehmung erreicht wird, welche dem von der Funktion F(x,y) beschrieben Oberflächenprofil des dreidimensionalen Objekts entspricht bzw. zumindest näherungsweise entspricht. Die Wahrnehmung des Betrachters kann so dem natürlichen Eindruck eines dreidimensionalen Objekts angenähert werden.

Weiter ist es möglich, dass die Funktion F(x,y) eine bereichsweise stetige, bereichsweise differenzierbare Funktion ist.

Bei dem Verfahren zur Herstellung eines Sicherheitselements hat es sich bewährt, wenn der Schritt a) des Erfassens des dreidimensionalen Objekts das Erstellen eines virtuellen dreidimensionalen Objekts und/oder das Erfassen eines realen dreidimensionalen Objekts mittels einer Erfassungseinrichtung, insbesondere eines taktilen Profilometers und/oder eines Laserscanners, umfasst. Das Erfassen des dreidimensionalen Objekts umfasst somit sowohl das Erstellen und das freie Gestalten eines virtuellen dreidimensionalen Objekts, ohne Vorlage oder auch beispielsweise ausgehend von Photographien des dreidimensionalen Objekts als Vorlage, als auch das Erfassen eines realen dreidimensionalen Objekts mittels einer Erfassungseinrichtung. Vorzugsweise werden als Vorlage zur Erstellung des virtuellen dreidimensionalen Objekts ein oder mehrere Photographien des dreidimensionalen Objekts verwendet. Hierbei ist es von Vorteil, wenn die ein oder mehreren Photographien aus verschiedenen Perspektiven aufgenommen werden, um anschließend eine möglichst exakte Nachbildung des dreidimensionalen Objekts durch das virtuelle dreidimensionale Objekt erstellen zu können. Es ist jedoch auch möglich, dass das virtuelle dreidimensionale Objekt ausgehend von lediglich einer Photographie erstellt wird. Derartige virtuelle dreidimensionale Objekte werden beispielsweise durch Computergrafiken erzeugt, welche auf Polygonnetzen, Drahtgittermodellen oder Voxeln basieren. Geeignete Software zu Erstellung eines virtuellen dreidimensionalen Objekts ist beispielsweise die Software ZBrush oder Sculptris der Firma Pixologic, Kalifornien, USA. Es ist auch möglich, dass reale dreidimensionale Objekte mittels einer Erfassungseinrichtung, insbesondere eines taktilen Profilometers und/oder eines Laserscanners, erfasst werden. So kann beispielsweise eine Münze als reales dreidimensionales Objekt mittels einer Erfassungseinrichtung erfasst werden. Ein taktiles Profilometer tastet beispielsweise die Oberfläche des dreidimensionalen Objekts mittels einer feinen Spitze ab. Aus den so gewonnen Messdaten wird ein virtuelles dreidimensionales Objekt erstellt. Ein Laserscanner erstellt ebenfalls ein virtuelles dreidimensionales Objekt durch punktweises Abtasten der Oberfläche des dreidimensionalen Objekts durch einen Laserstrahl, dessen Fokus bei jedem abgetastetem Punkt variiert wird. Bei einem Laserscanner handelt es sich im Gegensatz zu dem taktilen Profilometer um eine berührungslose optische Erfassungseinrichtung. Weiter ist es möglich, weitere berührungslose optische Erfassungseinrichtungen, welche beispielsweise auf der Konfokaltechnik oder der Weißlichtinterferometrie beruhen, zur Erfassung des dreidimensionalen Objekts zu verwenden.

Weiter ist es möglich, dass reale dreidimensionale Objekte, wie beispielsweise bekannte Gebäude oder plastische, dreidimensionale Abbilder wie z.B. Büsten von bekannten Personen, erfasst werden, welche für einen Betrachter einen hohen Wiedererkennungswert aufweisen. Auch ist es möglich, virtuelle dreidimensionale Objekte zu erstellen, welche nicht als reale dreidimensionale Objekte vorkommen. So können beispielsweise virtuell auch dreidimensionale real unmögliche Figuren, wie beispielsweise eine unmögliche Treppe, erstellt werden.

Vorzugsweise entspricht die Ortsauflösung der Erfassungseinrichtung mindestens dem 1,5-fachen, bevorzugt dem 2-fachen, weiter bevorzugt dem 2,5-fachen, der kleinsten darzustellenden Struktur des durch die Funktion F(x,y) beschriebenen Oberflächenprofils des dreidimensionalen Objekts. Hierdurch wird erreicht, dass alle Details des dreidimensionalen Objekts entsprechend in der ersten Mikrostruktur wiedergegeben sind und der Betrachter somit alle Details des dreidimensionalen Objekts in der ersten optischen Wahrnehmung, welche dem von der Funktion F(x,y) beschriebenen Oberflächenprofil des dreidimensionalen Objekts entspricht, wahrnimmt.

Vorteilhafterweise wird in dem Schritt c) als erste Mikrostruktur eine Mikrostruktur mit einem binären Oberflächenrelief, einem mehrstufigen Oberflächenrelief und/oder einem kontinuierlichen Oberflächenrelief bestimmt.

Weiter ist es vorteilhaft, wenn die erste Mikrostruktur ein binäres Oberflächenrelief, ein mehrstufiges Oberflächenrelief oder ein kontinuierliches Oberflächenrelief aufweist. So können als kontinuierliches Oberflächenrelief beispielsweise Sinusgitterstrukturen verwendet werden. Weiter ist es möglich, dass die erste Mikrostruktur regelmäßig ist oder in einem oder mehreren Strukturparametern statistisch, insbesondere zufällig und/oder pseudo-zufällig, variiert ist. Auch ist es möglich, dass die erste Mikrostruktur eine Kombination einer der vorgenannten Mikrostrukturen mit einer isotropen oder anisotropen Mattstruktur ist. Eine solche Kombination kann beispielsweise eine additive oder subtraktive Überlagerung der ersten Mikrostruktur mit einer isotropen oder anisotropen Mattstruktur sein.

Bevorzugt wird die Strukturhöhe der ersten Mikrostruktur im Wesentlichen konstant über die gesamte Fläche der ersten Mikrostruktur zur Ausbildung eines binären Oberflächenreliefs gewählt und weiter wird die Breite der Gitterfurchen und/oder der Gitterstege des binären Oberflächenreliefs der ersten Mikrostruktur derart gewählt, dass für den Betrachter die erste optische Wahrnehmung erreicht wird. Das binäre Oberflächenrelief weist im Wesentlichen rechteckige Gitterfurchen und Gitterstege auf, so dass die Beugung des Lichts in unterschiedliche Richtungen, dadurch erreicht wird, dass die Breite der Gitterfurchen und/oder der Gitterstege des binären Oberflächenreliefs entsprechend variiert wird. Derartige binäre Oberflächenreliefe lassen sich unter Verwendung entsprechender Masken erzeugen, was einerseits in sehr hoher Genauigkeit der erzeugten ersten Mikrostrukturen mit binären Oberflächenrelief und andererseits in vergleichsweise niedrigen Herstellungskosten resultiert. Durch die hohe Genauigkeit der derart erzeugten ersten Mikrostrukturen wird wiederum eine gute Brillanz des durch die erste Mikrostruktur erzeugten optisch variablen Effekts erzielt.

Auch ist es möglich, dass die erste Mikrostruktur zur Ausbildung eines kontinuierlichen Oberflächenreliefs derart ausgestaltet wird, dass die jeweils einen Flanken der Gitterfurchen des kontinuierlichen Oberflächenreliefs der ersten Mikrostruktur parallel zueinander und im Wesentlichen parallel zur einer Senkrechten auf die zweidimensionalen Referenzfläche verlaufen, dass die jeweils anderen Flanken der Gitterfurchen zumindest bereichsweise parallel zu dem von der Funktion F(x,y) beschriebenen Oberflächenprofil des dreidimensionalen Objekts verlaufen und/oder dass zur Ausbildung des kontinuierlichen Oberflächenreliefs der ersten Mikrostruktur die erste Mikrostruktur derart gestaltet wird, dass die erste Mikrostruktur gleich dem Ergebnis aus der von der Funktion F(x,y) beschriebenen Oberflächenprofil modulo des vorbestimmten Werts der Strukturhöhe der ersten Mikrostruktur ist. Unter kontinuierlichem Oberflächenrelief wird somit ein zumindest bereichsweise kontinuierliches Oberflächenrelief verstanden. So weist das kontinuierliche Oberflächenrelief zwischen den jeweils einen Flanken der Gitterfurchen, die parallel zueinander und im Wesentlichen parallel zu einer Senkrechten auf die zweidimensionale Referenzfläche verlaufen, einen kontinuierlichen Verlauf auf. Derartige Oberflächenreliefe werden bevorzugt im Wege des so genannten "Direkt-Schreibens" mittels Laser- oder Elektronenstrahl-Lithographiemaschinen erzeugt. Dieses Verfahren wird auch Grauton-Lithographie genannt. Derartige Maschinen bzw. Verfahren gestatten es, ein ganz bestimmtes Oberflächenrelief zu erzeugen, welches den anstrebten optischen Effekt für den Betrachter in Form der ersten optischen Wahrnehmung erreicht, die dem von der Funktion F(x,y) beschriebenen Oberflächenprofil des dreidimensionalen Objekts entspricht. Weiter können derartige Oberflächenreliefe mittels holographischer Verfahren hergestellt werden, oder auch mit spezialisierten Grauton-Maskenverfahren.

Weiter ist es möglich, dass die zumindest bereichsweise parallel zu dem von der Funktion F(x,y) beschriebenen Oberflächenprofil des dreidimensionalen Objekts verlaufenden jeweils anderen Flanken der Gitterfurchen derart stufenförmig angenährt werden, dass die Höhe der stufenförmigen Annäherungen zwischen vorbestimmten Koordinatenpunkten x und y der zweidimensionalen Referenzfläche konstant ist und dem Wert an den jeweiligen Koordinatenpunkten x und y der ersten Mikrostruktur mit dem kontinuierlichen Oberflächenrelief entsprechen. Hierdurch wird ein mehrstufiges Oberflächenrelief erzeugt, welches für den Betrachter die erste optische Wahrnehmung erreicht. Vorteilhafterweise verlaufen die Flanken der stufenförmigen Annäherung im Wesentlichen parallel zu der Senkrechten auf die zweidimensionale Referenzfläche. Vorzugsweise bilden die vorbestimmten Koordinatenpunkte x und y ein zweidimensionales Raster, wobei die stufenförmige Annährung in je einer Rasterfläche des zweidimensionalen Rasters ausgeführt wird. Je kleiner die Rasterflächen des zweidimensionalen Rasters, d.h. je größer die Auflösung des zweidimensionalen Rasters, desto besser wird die erste Mikrostruktur mit dem kontinuierlichen Oberflächenrelief stufenförmig angenähert.

Weiter ist es von Vorteil, wenn in dem Schritt d) das Einbringen der ersten Mikrostruktur in die Schicht des Sicherheitselements mittels Elektronenstrahllithographie und/oder Fotolithographie erfolgt. Hierdurch wird es möglich, erste Mikrostrukturen mit Oberflächenreliefen, insbesondere binären Oberflächenreliefen, mehrstufigen Oberflächenreliefen und/oder kontinuierlichen Oberflächenreliefen, zu erzeugen, welche die angestrebte erste optische Wahrnehmung für den Betrachter erreichen, die dem von der Funktion F(x,y) beschriebenen Oberflächenprofil des dreidimensionalen Objekts entspricht.

Weiter ist es möglich, dass das Verfahren zur Herstellung eines Sicherheitselements, weiter folgende Schritte umfasst:
- Bestimmen von mindestens zwei getrennten Farbauszügen des ersten Objekts, insbesondere des dreidimensionalen Objekts und/oder des von der Funktion F(x,y) beschriebenen Oberflächenprofils des dreidimensionalen Objekts und/oder einer zweidimensionalen Darstellung des dreidimensionalen Objekts, wobei jeder der mindestens zwei getrennten Farbauszüge des ersten Objekts, insbesondere des dreidimensionalen Objekts und/oder des von der Funktion F(x,y) beschriebenen Oberflächenprofils des dreidimensionalen Objekts und/oder einer zweidimensionalen Darstellung des dreidimensionalen Objekts, einer unterschiedlichen Grundfarbe eines Farbraums, insbesondere des RGB-Farbraums, entspricht;
- Erstellen von mindestens zwei getrennten Rastermasken für die mindestens zwei getrennten Farbauszüge derart, dass sich die mindestens zwei getrennten Rastermasken in den Rasterparametern, insbesondere Rasterweite und/oder Rasterwinkel, unterscheiden, und wobei die Rasterparameter, insbesondere Rasterweite und/oder Rasterwinkel, einer unterschiedlichen Grundfarbe eines Farbraums, insbesondere des RGB-Farbraums, entspricht;
- Belichten einer Photoresistplatte derart, dass die Photoresistplatte registerhaltig mittels der mindestens zwei getrennten Rastermasken belichtet wird;
- Entwickeln der Photoresistplatte.

Weiter es möglich, dass die Belichtung der Photoresistplatte mittels einer Gitterbelichtung oder Schlitzbelichtung und unter Verwendung von einem oder mehreren Zwischenmaster erfolgt. Hierdurch wird es möglich, die Abhängigkeit der mehrfarbigen Darstellung des ersten Objekts bezüglich Änderungen des Betrachtungs- und/oder Beleuchtungswinkels zu verringern. Diese Verringerung der Abhängigkeit der mehrfarbigen Darstellung des ersten Objekts bezüglich Änderungen des Betrachtungs- und/oder Beleuchtungswinkels führt jedoch zu leichten Einbußen in der Helligkeit des ersten Objekts.

Weiter ist es möglich, dass das Verfahren zur Herstellung eines Sicherheitselements, weiter folgende Schritte umfasst:
- Erzeugen einer Prägematrize mittels der entwickelten Photoresistplatte.

Weiter ist es von Vorteil, dass das Verfahren zur Herstellung eines Sicherheitselements, weiter folgende Schritte umfasst:
- Einbringen einer zweiten Mikrostruktur in die Schicht des Sicherheitselement, insbesondere in ein oder mehrere zweiten Zonen des Sicherheitselements, derart, dass der zweiten Mikrostruktur für den Betrachter eine zweite optische Wahrnehmung erreicht wird, welche einer mehrfarbigen Darstellung des ersten Objekts, insbesondere des dreidimensionalen Objekts und/oder des von der Funktion F(x,y) beschriebenen Oberflächenprofils des dreidimensionalen Objekts und/oder einer zweidimensionalen Darstellung des dreidimensionalen Objekts, entspricht.

Weiter ist es möglich, die zweite Mikrostruktur im Wege des so genannten "Direkt-Schreibens" mittels Laser- oder Elektronenstrahl-Lithographiemaschinen in die Schicht des Sicherheitselements einzubringen. Hierdurch ist es möglich die Mikrostruktur mit höchster Qualität und feinsten Auflösungen bis in den Nanometerbereich zu erzeugen.

Gemäß eines weiteren bevorzugten Ausführungsbeispiels der Erfindung umfasst die mehrfarbige Darstellung des ersten Objekts mindestens zwei unterschiedliche Grundfarben eines Farbraums, insbesondere des RGB-Farbraums. Hierdurch können interessante und damit einprägsame optische Effekte für den Betrachter erzeugt werden, wobei durch die Verwendung von mindestens zwei unterschiedlichen Grundfarben des Farbfarbraums für den Betrachter Mischfarben aus den mindestens zwei unterschiedlichen Grundfarben des Farbraums erzeugt werden.

Weiter ist es von Vorteil, dass die unterschiedlichen Grundfarben im Bereich der für das menschliche Auge sichtbaren Wellenlängen, insbesondere im Wellenlängenbereich von 380 nm bis 780 nm, liegen.

Auch ist es möglich, dass die zweite Mikrostruktur ein Echtfarbenhologramm und/oder ein Kinegram^{®} ist.

Weiter ist es von Vorteil, wenn die die erste Mikrostruktur umfassende Schicht des Sicherheitselements eine Reflexionsschicht, insbesondere eine Metallschicht und/oder eine HRI oder LRI-Schicht *(engl.* high refraction index-HRI, low refraction index - LRI), umfasst, vorzugsweise handelt es sich um ein Mehrfachschichtsystem mit mehreren nebeneinander und/oder übereinander angeordneten Reflexionsschichten, beispielsweise Metallschichten und/oder HRI-Schichten oder abwechselnde HRI- und LRI-Schichten.

So ist es möglich, dass die Reflexionsschicht als eine Metallschicht aus Chrom, Aluminium, Gold, Kupfer, Silber oder einer Legierung solcher Metalle ausgeformt ist. Die Metallschicht wird vorzugsweise im Vakuum in einer Schichtdicke von 10 nm bis 150 nm aufgedampft.

Weiter ist es auch möglich, dass die Reflexionsschicht von einer transparenten Reflexionsschicht gebildet wird, vorzugsweise einer dünnen oder fein strukturierten metallischen Schicht oder einer dielektrischen HRI- oder LRI-Schicht. Eine solche dielektrische Reflexionsschicht besteht beispielsweise aus einer aufgedampften Schicht aus einem Metalloxid, Metallsulfid, z.B. Titanoxid oder ZnS, etc. mit einer Dicke von 10 nm bis 150 nm.

Weiter ist es möglich, dass die Reflexionsschicht bereichsweise ausgeformt ist. Hierdurch wird beispielsweise erreicht, dass weitere Sicherheitsmerkmale, welche unter der Reflexionsschicht liegen, weiterhin für einen Betrachter sichtbar sind. Auch ist es möglich, dass die Reflexionsschicht musterförmig, insbesondere zur Darstellung einer Information, ausgestaltet ist. Ein Muster kann beispielsweise ein graphisch gestalteter Umriss, eine figürliche Darstellung, ein Raster, ein Bild, ein Motiv, ein Symbol, ein Logo, ein Portrait, ein alphanumerisches Zeichen, ein Text und dergleichen sein. Hierdurch ist es möglich, die Fälschungssicherheit weiter zu erhöhen.

Gemäß eines weiteren bevorzugten Ausführungsbeispiels der Erfindung sind die einen oder mehreren ersten Zonen und die einen oder mehreren zweiten Zonen gemäß eines Rasters angeordnet.

Weiter ist es möglich, dass die Rasterweiten kleiner sind als die Auflösungsgrenze des unbewaffneten menschlichen Auges sind, insbesondere dass die Rasterweiten kleiner als 300 µm, bevorzugt kleiner als 200 µm, sind.

Vorzugsweise ist das Raster ein eindimensionales, von der x- oder der y-Achse aufgespanntes Raster, insbesondere Linienraster.

Auch ist es möglich, dass das eindimensionale Raster schlangenlinienförmig oder wellenlinienförmig ausgebildet ist.

Weiter ist von Vorteil, wenn das Raster ein zweidimensionales, von der x- und der y-Achse aufgespanntes Raster, insbesondere Punktraster, ist.

Vorteilhafterweise ist das Raster ein periodisches Raster.

Vorzugsweise sind die einen oder mehreren ersten Zonen und die einen oder mehreren zweiten Zonen ineinandergerastert.

Weiter ist es von Vorteil, wenn jeweils eine erste Zone der ein oder mehreren ersten Zonen benachbart zu einer zweiten Zone der ein oder mehreren zweiten Zonen angeordnet ist und die ein oder mehreren ersten Zonen abwechselnd mit den ein oder mehreren zweiten Zonen angeordnet sind.

So ist es möglich, dass die Anordnung der einen oder mehreren ersten Zonen und der einen oder mehreren zweiten Zonen gemäß eines Rasters mittels des sogenanntem Interlacing erfolgt, so dass die einen oder mehreren ersten Zonen und die einen oder mehreren zweiten Zonen ineinandergerastert sind, d.h. es liegt jeweils eine erste Zone und eine zweite Zone benachbart zueinander und jeweils abwechselnd vor. So ist es möglich, dass durch das Interlacing der zwei hoch aufgelösten ersten und zweiten Zonen, deren Rasterweite insbesondere jeweils unterhalb des Auflösungsvermögens des unbewaffneten menschlichen Auges liegt, die optischen Effekte beider ersten und zweiten Zonen entsprechend gleichzeitig und kombiniert wahrgenommen werden. Stellt die erste Mikrostruktur in den ein oder mehreren ersten Zonen so beispielsweise ein dreidimensional wirkendes Objekt oder Motiv dar und die zweite Mikrostruktur in den ein oder mehreren zweiten Zonen eine Echtfarbendarstellung desselben Objekts oder Motivs der ersten Mikrostruktur in den ersten Zonen, z.B. als Echtfarbenhologramm, dar, dann kann damit in besonders vorteilhafter Weise in dieser Kombination ein räumlicher bzw. dreidimensionaler Eindruck in Echtfarben erreicht werden. Diese Kombination ist dem natürlichen Eindruck einer real plastischen Wiedergabe des Objekts oder Motivs so stark angenähert, dass ein menschlicher Betrachter den optischen Effekt als sehr realistisch empfinden kann.

Vorzugsweise ist zumindest einer der Parameter Azimutwinkel, Gitterperiode oder Gittertiefe der ersten Mikrostruktur pseudo-zufällig innerhalb eines vordefinierten Variationsbereichs variiert. So ist es möglich, dass für die pseudo-zufällige Variation eines oder mehrerer der Parameter Azimutwinkel, Gitterperiode oder Gittertiefe der ersten Mikrostruktur innerhalb eines jeweils vordefinierten Variationsbereichs ein Parametervariationswert aus einer vordefinierten Gruppe von Parametervariationswerten ausgewählt ist. Die vordefinierte Gruppe umfasst bevorzugt zwischen 3 und 30, weiter bevorzugt zwischen 3 und 10 Parametervariationswerte. Die pseudo-zufällige Variation erfolgt somit nicht im Sinne eines rein zufälligen Prozesses, welcher sämtliche mögliche Parameter innerhalb des Variationsbereichs annehmen kann, sondern weist eine beschränkte Anzahl an Möglichkeiten auf.

Weiter ist vorteilhaft, wenn der Parameter Azimutwinkel der ersten Mikrostruktur pseudo-zufällig in einem Variationsbereich von -180° bis +180° variiert.

Vorteilhafterweise beträgt die Differenz der maximalen Gittertiefe der ersten Mikrostruktur und der minimalen Gittertiefe der ersten Mikrostruktur, zwischen denen die Gittertiefe pseudo-zufällig variiert, zwischen 0,1 µm und 10 µm, bevorzugt zwischen 0,25 µm und 2,5 µm.

Auch ist es möglich, dass die Rasterweite des eindimensionalen Rasters in Richtung der x-Achse oder der y-Achse, insbesondere innerhalb eines vordefinierten Variationsbereichs, variiert.

Weiter ist es möglich, dass das Raster ein nicht periodisches Raster ist, insbesondere wobei die Rasterweite innerhalb eines vordefinierten Variationsbereichs variiert ist.

So ist es von Vorteil, wenn die Rasterweite in Richtung der Koordinatenachse x und/oder in Richtung der Koordinatenachse y in einem Bereich zwischen 50% und 150%, insbesondere zwischen 80% und 120%, der mittleren Rasterweite in Richtung der Koordinatenachse x und/oder in Richtung der Koordinatenachse y variiert ist.

Weiter ist es möglich, dass die Rasterweite in Richtung der Koordinatenachse x und/oder in Richtung der Koordinatenachse y um mindestens 1%, insbesondere um mindestens 10% zwischen zwei aufeinanderfolgenden Rasterpunkten variiert.

Weiter kann es vorgesehen sein, dass ein oder mehreren dritte Zonen der Schicht des Sicherheitselements eine dritte Mikrostruktur aufweist, insbesondere eine diffraktive Reliefstruktur ausgewählt aus der Gruppe Kinegram^{®} oder Hologramm, Beugungsstruktur Nullter Ordnung, Blazegitter, insbesondere asymmetrische Sägezahn-Reliefstruktur, Beugungsstruktur, insbesondere lineares sinusförmiges Beugungsgitter oder gekreuztes sinusförmiges Beugungsgitter oder lineares ein- oder mehrstufiges Rechteckgitter oder gekreuztes ein- oder mehrstufiges Rechteckgitter, lichtbeugende und/oder lichtbrechende und/oder lichtfokussierende Mikro- oder Nanostruktur, binäre oder kontinuierliche Fresnellinse, binäre oder kontinuierliche Fresnel-Freiformfläche, diffraktive oder refraktive Makrostruktur, insbesondere Linsenstruktur oder Mikroprismenstruktur, Spiegelfläche, Mattstruktur, insbesondere anisotrope oder isotrope Mattstruktur oder Kombinationen dieser Strukturen.

Das Sicherheitsdokument kann beispielsweise eine Banknote, Wertpapier, Aktie, Kreditkarte, Bankkarte, Barzahlungskarte, Kundenkarte, Ticket oder ein ID-Dokument wie eine Ausweiskarte, Visum, Führerschein, insbesondere eine Chipkarte oder ein Passbuch sein.

Im Folgenden werden Ausführungsbeispiele der Erfindung exemplarisch unter Zuhilfenahme der beiliegenden, nicht maßstabgetreuen Figuren erläutert.
- Fig. 1a: zeigt eine schematische Draufsicht auf ein Sicherheitsdokument mit einem Sicherheitselement
- Fig. 1b: zeigt eine schematische Draufsicht auf das Sicherheitselement nach Fig. 1a
- Fig. 2a bis Fig. 2f: zeigen schematisch Verfahrensschritte zur Herstellung eines Sicherheitselements
- Fig. 3a bis Fig. 3c: zeigen schematische Schnittdarstellungen
- Fig. 4a bis Fig. 4c: zeigen schematisch Verfahrensschritte zur Herstellung eines Sicherheitselements
- Fig. 5a bis Fig. 5c: zeigen schematisch Verfahrensschritte zur Herstellung eines Sicherheitselements
- Fig. 6a bis Fig. 6c: zeigen vergrößerte Ausschnitte der Fig. 5c
- Fig. 7a bis Fig. 7c: zeigen schematische Draufsichten auf ein Sicherheitselement
- Fig. 8a bis Fig. 8c: zeigen schematische Draufsichten auf ein Sicherheitselement
- Fig. 9: zeigt eine schematische Schnittdarstellung einer Transferfolie

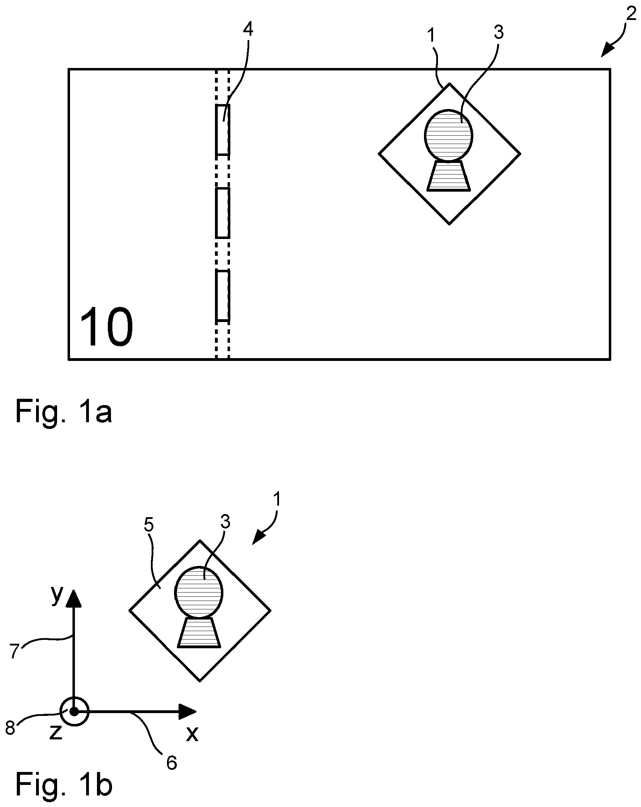

Die Fig. 1a zeigt ein Sicherheitselement 1 auf einem Sicherheitsdokument 2. Bei dem Sicherheitsdokument 2 handelt es sich bevorzugt um eine Banknote, ein Ausweisdokument, ein Visum, ein Wertpapier oder eine Kreditkarte. Das Sicherheitsdokument 2 kann weitere Sicherheitselemente aufweisen, wie beispielsweise einen Sicherheitsfaden 4 oder (hier nicht einzeln gezeigt) einen Sicherheitsdruck, ein als Folienelement (Transferfolie oder Laminierfolie) appliziertes Sicherheitselement. Das Sicherheitselement 1 kann mit den weiteren Sicherheitselementen überlappen und/oder benachbart dazu angeordnet sein.

Das Sicherheitselement 1 kann z.B. mittels einer Klebstoffschicht auf das Sicherheitsdokument aufgebracht sein. Das Sicherheitselement 1 kann als Transferlage einer Transferfolie insbesondere mittels Heißprägen oder Kaltprägen auf dem Sicherheitsdokument 2 appliziert worden sein. Das Sicherheitselement 1 kann alternativ dazu auch als Etikett oder Label aufgebracht sein.

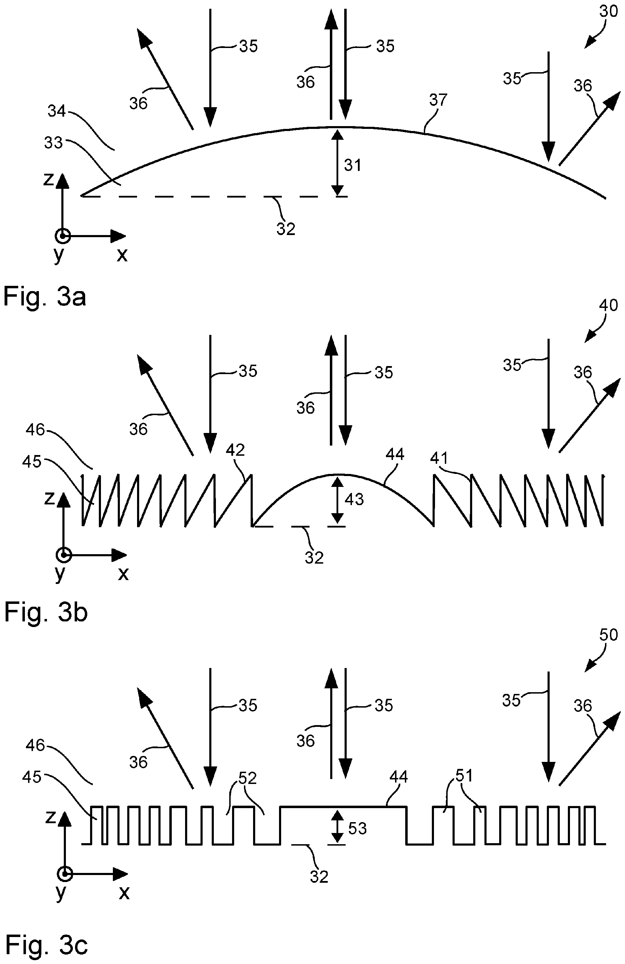

Das Sicherheitselement 1 weist wie in Fig. 1a gezeigt eine geometrische Figur 3 auf, welche einem Betrachter räumlich erscheint. Es ist jedoch auch möglich, dass das das Sicherheitselement 1 alphanumerische Zeichen, Portraits und/oder sonstige Objekte aufweist, welche einem Betrachter ebenfalls räumlich bzw. nach oben oder unten gewölbt erscheinen.

Wie in Fig. 1b gezeigt, wird eine durch die x-Koordinatenachse 6 und die y-Koordinatenachse 7 aufgespannte zweidimensionale Referenzfläche 5 definiert, sowie weiter eine auf der zweidimensionalen Referenzfläche 5 senkrecht stehende z-Achse 8. Fig. 1b verdeutlicht so beispielhaft ein durch die Koordinatenachsen x, y und z aufgespanntes dreidimensionales Koordinatensystem, welche die Raumrichtungen 6, 7 und 8 definiert.

Das Sicherheitselement 1 weist eine Schicht auf, welche eine Mikrostruktur umfasst. Bei der Schicht handelt es sich bevorzugt um eine Lackschicht mit einer Schichtdicke zwischen 1 µm und 100 µm.

Die Mikrostruktur ist derart ausgeformt, dass von der Mikrostruktur für einen Betrachter eine räumliche optische Wahrnehmung der geometrischen Figur 3 erreicht wird.

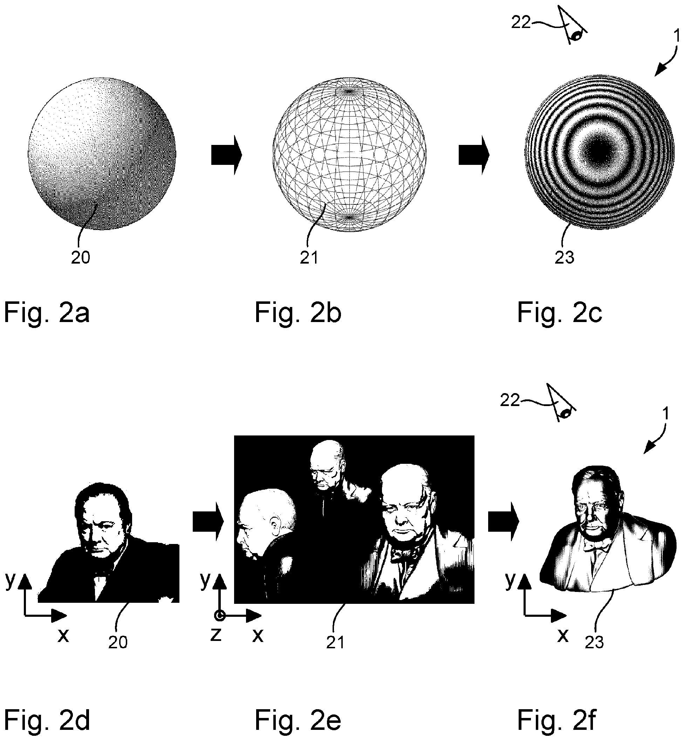

Fig. 2a bis Fig. 2f zeigen schematisch Verfahrensschritte zur Herstellung eines Sicherheitselements 1.

So zeigt Fig. 2a bis Fig. 2c Verfahrensschritte zur Herstellung eines Sicherheitselements 1 ausgehend von einem zweidimensionalen Bild 20, welches schematisch in Fig. 2a gezeigt ist. Das Bild 20 zeigt dabei eine Illustration eines dreidimensional wirkenden Objekts. Diese künstlerische Illustration oder Skizze ist dabei selbst zweidimensional und bewirkt lediglich durch ihre künstlerische Gestaltung bzw. Ausführung einen dreidimensionalen optischen Eindruck.

In einem ersten Schritt wird ausgehend von dem zweidimensionalen Bild 20 ein virtuelles dreidimensionales Objekt 21, wie in Fig. 2b gezeigt erstellt. Derartige virtuelle dreidimensionale Objekte 21 werden beispielsweise durch Computergrafiken erzeugt, welche auf Polygonnetzen, Drahtgittermodellen oder Voxeln basieren. Geeignete Software zu Erstellung eines virtuellen dreidimensionalen Objekts 21 ist beispielsweise die Software ZBrush oder Sculptris der Firma Pixologic, Kalifornien, USA. Auch ist es möglich, virtuelle dreidimensionale Objekte zu erstellen, welche nicht als reale dreidimensionale Objekte vorkommen. Auch können beispielsweise virtuell auch dreidimensionale real unmögliche Figuren, wie beispielsweise eine unmögliche Treppe, erstellt werden. Für derartige virtuelle dreidimensionale Objekte ist somit kein zweidimensionales Bild als Vorlage notwendig, so dass derartige virtuelle dreidimensionale Objekte rein mittels Computergraphiken erstellt werden.

Es ist auch möglich, dass reale dreidimensionale Objekte mittels einer Erfassungseinrichtung, insbesondere eines taktilen Profilometers und/oder eines Laserscanners, erfasst werden. So kann beispielsweise eine Münze als reales dreidimensionales Objekt mittels einer Erfassungseinrichtung erfasst werden. Ein taktiles Profilometer tastet beispielsweise die Oberfläche des dreidimensionalen Objekts mittels einer feinen Spitze ab. Aus den so gewonnen Messdaten wird ein virtuelles dreidimensionales Objekt erstellt. Ein Laserscanner erstellt ebenfalls ein virtuelles dreidimensionales Objekt durch punktweise abtasten der Oberfläche des dreidimensionalen Objekts durch einen Laserstrahl, dessen Fokus bei jedem abgetastetem Punkt variiert wird. Bei einem Laserscanner handelt es sich im Gegensatz zu dem taktilen Profilometer um eine berührungslose optische Erfassungseinrichtung. Weiter ist es möglich, weitere berührungslose optische Erfassungseinrichtungen, welche beispielsweise auf der Konfokaltechnik oder der Weißlichtinterferometrie beruhen, zur Erfassung des dreidimensionalen Objekts zu verwenden. Weiter ist es auch möglich, dass reale dreidimensionale Objekte mittels einer Streifenprojektion oder Triangulationsmethode erfasst werden. Mit derartigen Erfassungseinrichtungen ist es möglich sehr große Objekte, insbesondere Gebäude, Autos oder Topographien, wie beispielsweise Gebirge, zu erfassen. Vorzugsweise entspricht die Ortsauflösung der Erfassungseinrichtung mindestens dem 1,5fachen, bevorzugt dem 2fachen, weiter bevorzugt dem 2,5fachen, der kleinsten darzustellenden Struktur des realen dreidimensionalen Objekts. Weiter ist es möglich, dass reale dreidimensionale Objekte, wie beispielsweise bekannte Gebäude oder Büsten von bekannten Personen, erfasst werden, welche für Betrachter einen hohen Wiedererkennungswert aufweisen.

In einem weiteren Schritt wird ein durch eine Funktion F(x,y) beschriebenes Oberflächenprofil des dreidimensionales Objekts 21 bestimmt, wobei die Funktion F(x,y) den Abstand zwischen dem Oberflächenprofil und einer von den Koordinatenachsen x und y aufgespannten zweidimensionalen Referenzfläche an den Koordinatenpunkten x und y beschreibt. Hierzu wird beispielsweise das dreidimensionale Oberflächenprofil punktweise auf die zweidimensionale Referenzfläche projiziert und der entsprechende Abstand für jeden Punkt der Referenzfläche relativ zur gewählten Referenzfläche geometrisch berechnet. Hierdurch entsteht ein von der Funktion F(x,y) beschriebenes Oberflächenprofil, beispielsweise in Form einer Punktwolke, welche die Höheninformation des dreidimensionalen Objekts kodiert. Vorzugsweise wird eine große Anzahl von Punkten, insbesondere zwischen 10 und 100 Millionen Punkten, und damit eine entsprechend exakte Abtastung der Oberfläche des dreidimensionalen Objekts verwendet. Die Projektion erfolgt vorzugsweise mittels geeigneter Projektionsalgorithmen. Weiter kann die zweidimensionale Referenzfläche dabei flach und/oder gekrümmt sein.

In einem weiteren Schritt wird eine Mikrostruktur derart bestimmt, dass die Strukturhöhe der Mikrostruktur auf einen vorbestimmten Wert kleiner als der maximale Abstand zwischen dem Oberflächenprofil und der zweidimensionalen Referenzfläche begrenzt wird und dass durch die Mikrostruktur für einen Betrachter 22 eine erste optische Wahrnehmung erreicht wird, welche dem von der Funktion F(x,y) beschriebenen Oberflächenprofil des dreidimensionalen Objekts 21 entspricht. So wird ausgehend von dem von der Funktion F(x,y) beschriebenen Oberflächenprofil des dreidimensionalen Objekts 21 beispielsweise mittels einer mathematischen modulo-Operation die Mikrostruktur berechnet, wobei die Strukturhöhe der Mikrostruktur vorab auf einen maximal zulässigen Wert begrenzt wird. Die Mikrostruktur ist dann gleich dem Ergebnis aus der von der Funktion F(x,y) beschriebenen Oberflächenprofil modulo des vorbestimmten Werts der Strukturhöhe der Mikrostruktur. Der maximale zulässige Wert der Strukturhöhe oder die Strukturhöhe selbst wird hierbei vorzugsweise aufgrund von Randbedingungen, wie beispielsweise einer maximal möglichen Strukturhöhe oder einer Maximierung der Beugungseffizienz für eine bestimmte Wellenlänge, bestimmt.

In einem letzten Schritt wird die Mikrostruktur in eine Schicht des Sicherheitselements 1, insbesondere mittels lithographischer Verfahren, derart eingebracht, dass von der Mikrostruktur für den Betrachter 22 die optische Wahrnehmung 23 erreicht wird, welche dem von der Funktion F(x,y) beschriebenen Oberflächenprofil des dreidimensionalen Objekts 21 entspricht, wie in Fig. 2c gezeigt. Die Fig. 2c zeigt dabei sehr vereinfacht und schematisch eine mögliche die optische Wahrnehmung 23, welche von der Mikrostruktur der Schicht des Sicherheitselements 1 erzeugt wird.. Es kann jedoch mit der Mikrostruktur auch ein erheblich realistischer wirkender 3D-Effekt erzielt werden, als dies mit der künstlerischen Illustration der Fig. 2a möglich wäre. Vom prinzipiellen optischen Eindruck her kann dabei auch mit der die optische Wahrnehmung 23 erzeugenden Mikrostruktur der Fig. 2c ein ähnlich wie in Fig. 2a gezeigtes dreidimensionales Objekt bzw. Motiv erzeugt werden, wobei lediglich das Motiv ähnlich ist, jedoch die dreidimensionale optische Wirkung verstärkt und realistischer wiedergegeben wird. Die Mikrostruktur kann beispielsweise mittels gängiger lithographischer Verfahren wie Elektronenstrahllithographie, Laserstrahllithographie, Kinemax, Holographie und/oder Maskenbelichtungsverfahren in die Schicht des Sicherheitselements 1 eingebracht werden.

Fig. 2d bis Fig. 2f zeigen Verfahrensschritte zur Herstellung eines Sicherheitselements 1 ausgehend von einem zweidimensionalen Bild 20, welches in Fig. 2d gezeigt ist und ein Portrait in Form einer Fotographie darstellt. Fig. 2e zeigt drei perspektivische Ansichten eines virtuellen dreidimensionalen Objekts 21, welches durch Computergrafiken erzeugt ist. Fig. 2f zeigt die für einen Betrachter erreichte optische Wahrnehmung 23 des Sicherheitselements 1. Bezüglich der Verfahrensschritte zur Herstellung des Sicherheitselements 1 in den Fig. 2d bis Fig. 2f ist auf obige Ausführungen verwiesen.

Fig. 3a bis Fig. 3c zeigen schematische Schnittdarstellungen. So zeigt Fig. 3a Schnittdarstellung eines einfachen Kugelprofils 30. Dieses Kugelprofil 30 wurde gewählt, um im Folgenden die Zusammenhänge an einem besonders einfachen Beispiel erläutern zu können. Selbstverständlich weisen bei erheblich komplexeren Oberflächenprofilen, beispielsweise einem Portrait, einem Symbol oder einem künstlerisch gestalteten Relief, wie beispielsweise einem Wappen, dann auch die resultierenden Mikrostrukturen eine entsprechend höhere Komplexität auf, um den gewünschten optischen Effekt erzeugen zu können. Das Kugelprofil 30 der Fig. 3a stellt ein von der Funktion F(x,y) beschriebenes Oberflächenprofil 37 eines dreidimensionalen Objekts, beispielsweise eines Ausschnittes des dreidimensionalen Objekts 21 der Fig. 2b, dar. Die x-, y- und z-Achse ist hier ohne Einheiten dargestellt, da es auf eine genaue Größe nicht ankommt. Beispielsweise können die x- und y-Achse in der Einheit mm und die z-Achse in der Einheit Radiant angegeben sein. Beispielsweise kann der Durchmesser des Kugelprofils 30 so zwischen 0,15 mm und 300 mm betragen. Das Kugelprofil 30 weist eine maximale Strukturhöhe 31 auf, welche parallel zur Koordinatenachse z verläuft. Die Strukturhöhe 31 des Kugelprofils 30 beträgt in Fig. 3a 50, wobei es sich bei dem Wert um die Phasendifferenz in Radiant handelt. Bei Kenntnis der Wellenlänge des einfallendes Lichts 35, kann aus der Phasendifferenz (auch unter Berücksichtigung der Brechungsindizes der Materialschichten 33, 34) die geometrische Höhe berechnet werden. Die Koordinatenachse z ist die Normale auf die von den Koordinatenachsen x und y aufgespannten Referenzfläche 32. Die maximale Strukturhöhe 31 entspricht so dem maximalen Abstand zwischen dem von der Funktion F(x,y) beschriebenen Oberflächenprofils 37 des dreidimensionalen Objekts und der Referenzfläche 32. Das Kugelprofil 30 lenkt nun einfallendes Licht 35 entsprechend dessen geometrischer Ausgestaltung in die Richtungen 36 ab. Die Ablenkung des einfallenden Lichts 35 hängt weiter von Brechungsindizes der Materialschichten 33, 34 des dreidimensionalen Objekts und von der Wellenlänge des einfallenden Lichts 35 ab. Das von der Funktion F(x,y) beschriebene Oberflächenprofil 37 bildet somit eine optische Grenzfläche zwischen den Materialschichten 33, 34 des dreidimensionalen Objekts. Eine der Materialschichten 33, 34 des dreidimensionalen Objekts kann durch Luft gebildet sein.

Fig. 3b zeigt nun eine Mikrostruktur mit einem kontinuierlichen Oberflächenrelief 40. Die Mikrostruktur mit dem kontinuierlichen Oberflächenrelief 40 ist nun derart ausgeformt, dass diese einfallendes Licht 35 in dieselben Richtungen 36 ablenkt wie das von der Funktion F(x,y) beschriebenes Oberflächenprofil 37 der Fig. 3a. Hierbei wurden neben dem von der Funktion F(x,y) beschriebenen Oberflächenprofil 37 die Materialschichten 33, 34 des dreidimensionalen Objekts sowie die Wellenlänge des einfallenden Lichts 35 berücksichtigt, so dass die Ablenkung des einfallenden Licht im Wesentlichen in dieselben Richtungen 36 erfolgt wie in Fig. 3a. Wie in Fig. 3b gezeigt ist die Strukturhöhe 43 der Mikrostruktur mit dem kontinuierlichen Oberflächenrelief 40 geringer als die maximale Strukturhöhe 31 in der Fig. 3a des Kugelprofils 30. Die Strukturhöhe 43 beträgt in Fig. 3b 6, wobei es sich bei dem Wert wie in Fig. 3a um die Phasendifferenz in Radiant handelt. Vorzugsweise ist die Strukturhöhe 43 mindestens 10 Mal geringer als die maximale Strukturhöhe 31 des Kugelprofils 30. Die Flanken 41 der Gitterfurchen des kontinuierlichen Oberflächenreliefs der Mikrostruktur 44 verlaufen parallel zueinander und im Wesentlichen parallel zur der Senkrechten auf die zweidimensionalen Referenzfläche 32. Die jeweils anderen Flanken 42 der Gitterfurchen verlaufen zumindest bereichsweise parallel zu dem von der Funktion F(x,y) beschriebenen Oberflächenprofil 37. Die Mikrostruktur 44 wird bevorzugt durch das Ergebnis aus der von der Funktion F(x,y) beschriebenen Oberflächenprofil 37 modulo des vorbestimmten Werts der Strukturhöhe 43 der Mikrostruktur 44 bestimmt. Aufgrund der mathematischen modulo-Operation entstehen die Flanken 41 der Gitterfurchen des kontinuierlichen Oberflächenreliefs 40 der Mikrostruktur 44. Die Flanken 42 weisen einen kontinuierlichen Verlauf auf.

Weiter ist es möglich, dass die Flanken 42 derart stufenförmig angenährt werden, dass die Höhe der stufenförmigen Annäherungen zwischen vorbestimmten Koordinatenpunkten x und y der zweidimensionalen Referenzfläche 32 konstant ist und dem Wert an den jeweiligen Koordinatenpunkten x und y der Mikrostruktur mit dem kontinuierlichen Oberflächenrelief 40 entsprechen. Somit wird eine Mikrostruktur mit einem mehrstufigen Oberflächenrelief erzeugt. Vorteilhafterweise verlaufen die Flanken der stufenförmigen Annäherung im Wesentlichen parallel zu der Senkrechten auf die zweidimensionale Referenzfläche 32. Vorzugsweise bilden die vorbestimmten Koordinatenpunkte x und y ein zweidimensionales Raster, wobei die stufenförmige Annährung in je einer Rasterfläche des zweidimensionalen Rasters ausgeführt wird. Je kleiner die Rasterflächen des zweidimensionalen Rasters, d.h. je größer die Auflösung des Rasters, desto besser wird die Mikrostruktur mit dem kontinuierlichen Oberflächenrelief 40 stufenförmig angenähert.

Die Mikrostruktur 44 ist bevorzugt in eine der Schichten 45, 46 eingebracht. Bei den Schichten 45, 46 handelt es sich vorzugsweise um Lackschichten. Die Schichten 45, 46 sind insbesondere aus einem thermoplastischen Lack (z.B. aus PVC, Polyester oder thermoplastischen Acrylaten) oder UV-härtendem Lack (z.B. aus einem mit Isocyanat (NCO) vernetzendes Acrylat) gebildet. Vorzugsweise ist die dem Beobachter zugewandte Lackschicht 46 transparent oder transluzent. Die Schichten 45, 46 können auch gleich oder unterschiedlich eingefärbt sein. So ist es beispielsweise möglich, dass die Schicht 45 grün eingefärbt ist und die Schicht 46 rot eingefärbt ist. Weiter ist es möglich, dass eine der Schichten 45, 46 als Kleberschicht ausgeführt ist. Auch ist es von Vorteil, wenn sich der Brechungsindex der Schichten 45, 46 um mindestens 0,2 unterscheidet, um eine optische Grenzschicht zu bilden und die Mikrostruktur 44 damit sichtbar zu machen, und/oder wenn zwischen den Schichten 45, 46 direkt auf der Mikrostruktur 44 eine reflexionserhöhende Beschichtung, insbesondere aus Metall und/oder HRI-Material, angeordnet ist.

Die Mikrostruktur 44 mit dem kontinuierlichen Oberflächenrelief 40 wird bevorzugt mittels des so genannten "Direkt-Schreibens" erzeugt, d.h. einem Verfahren, bei dem entweder mittels eines Lasers das Material gemäß dem gewünschten Relief abgetragen wird oder mittels eines Lasers oder einer Elektronenstrahl-Lithographiemaschine ein Photo- oder Elektronenstrahlresist gemäß dem gewünschten Relief belichtet wird und anschließend durch Entwicklung des Photoresists das gewünschte oder dessen Negativrelief erhalten wird. Das "Direkt-Schreiben" ermöglicht somit insbesondere die Herstellung von kontinuierlichen Oberflächenreliefen der Mikrostruktur 44 gemäß Fig. 3b.

Weiter ist es von Vorteil, wenn die die Mikrostruktur 44 umfassende Schicht eine Reflexionsschicht, insbesondere eine Metallschicht und/oder eine HRI oder LRI-Schicht *(engl.* high refraction index - HRI, low refraction index - LRI), umfasst.

So ist es möglich, dass die Reflexionsschicht als eine Metallschicht aus Chrom, Aluminium, Gold, Kupfer, Silber oder einer Legierung solcher Metalle ausgeformt ist. Die Metallschicht wird vorzugsweise im Vakuum in einer Schichtdicke von 10 nm bis 150 nm aufgedampft.

Weiter ist es auch möglich, dass die Reflexionsschicht von einer transparenten Reflexionsschicht gebildet wird, vorzugsweise einer dünnen oder fein strukturierten metallischen Schicht oder einer dielektrischen HRI- oder LRI-Schicht. Eine solche dielektrische Reflexionsschicht besteht beispielsweise aus einer aufgedampften Schicht aus einem Metalloxid, Metallsulfid, z.B. Titanoxid, ZnS, etc. mit einer Dicke von 10 nm bis 150 nm. Die Reflexionsschicht kann auch aufgedruckt werden, beispielsweise mit einem Lack mit metallischen Pigmenten und/oder Nanopigmenten mit hohem Brechungsindex.

Weiter ist es möglich, dass die Reflexionsschicht bereichsweise ausgeformt ist. Auch ist es möglich, dass die Reflexionsschicht musterförmig, insbesondere zur Darstellung einer Information, ausgestaltet ist. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein.

Fig. 3c zeigt nun eine Mikrostruktur mit einem binären Oberflächenrelief 50. Die Mikrostruktur mit dem binären Oberflächenrelief 50 ist nun derart ausgeformt, dass diese einfallendes Licht 35 in, im Wesentlichen, dieselben Richtungen 36 ablenkt wie das von der Funktion F(x,y) beschriebenes Oberflächenprofil 37 der Fig. 3a. Wie in Fig. 3c gezeigt, ist die Strukturhöhe 53 der Mikrostruktur mit dem binären Oberflächenrelief 50 geringer als die maximale Strukturhöhe 31 in der Fig. 3a des Kugelprofils 30. Weiter ist die Strukturhöhe 53 der Mikrostruktur mit dem binären Oberflächenrelief 50 geringer als die Strukturhöhe 43 der Mikrostruktur mit dem kontinuierlichen Oberflächenrelief 40. Die Strukturhöhe 53 beträgt in Fig. 3c 3, wobei es sich bei dem Wert wie in Fig. 3a und Fig. 3b um die Phasendifferenz in Radiant handelt. Vorzugsweise ist die Strukturhöhe 53 mindestens 20 Mal geringer als die maximale Strukturhöhe 31 des Kugelprofils 30. Bevorzugt ist die Strukturhöhe 53 der Mikrostruktur mit dem binären Oberflächenrelief 50 im Wesentlichen konstant über die gesamte Fläche der Mikrostruktur 44. Die Breite der Gitterfurchen 52 und/oder der Gitterstege 51 des binären Oberflächenreliefs der Mikrostruktur 44 ist derart gewählt, dass einfallendes Licht 35 in dieselben Richtungen 36 abgelenkt wird, wie Licht, welches auf das von der Funktion F(x,y) beschriebene Oberflächenprofil 37 der Fig. 3a. einfällt. Das binäre Oberflächenrelief 50 weist im Wesentlichen rechteckige Gitterfurchen 52 und Gitterstege 51 auf, so dass die Beugung des Lichts in unterschiedliche Richtungen, dadurch erreicht wird, dass die Breite der Gitterfurchen 52 und/oder der Gitterstege 51 des binären Oberflächenreliefs entsprechend variiert wird, bzw. die Orientierung des Beugungsgitters variiert wird.

Die Mikrostrukturen 44 der Fig. 3c sowie mehrstufige Oberflächenreliefe, welche, wie bereits ausgeführt, durch eine stufenförmige Annährung eines kontinuierlichen Oberflächenreliefs entstehen, lassen sich unter Verwendung entsprechender Masken erzeugen. Weiter ist es auch möglich, derartige Mikrostrukturen mittels der so genannten und bereits erläuterten "Direkt-Schreib"-Verfahren zu erzeugen.

Bezüglich der Ausgestaltung der Schichten 45, 46 ist hier auf obige Ausführungen verwiesen.

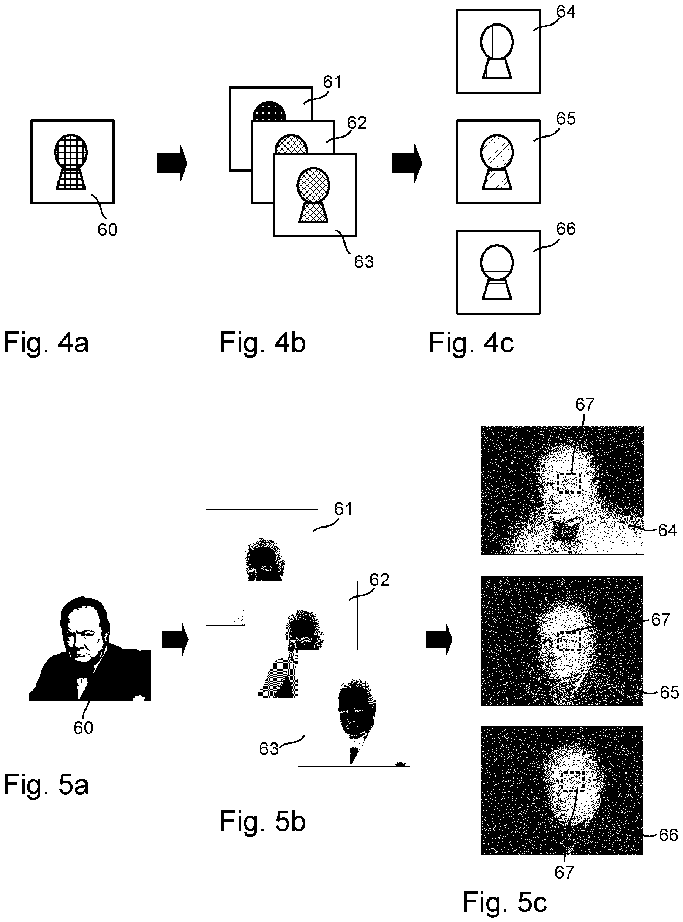

Fig. 4a bis Fig. 4c zeigen schematisch Verfahrensschritte zur Herstellung eines Sicherheitselements. Fig. 4a zeigt eine mehrfarbige figürliche Darstellung 60. Ausgehend von der mehrfarbigen figürlichen Darstellung 60 werden drei Farbauszüge 61, 62, 63, wie in Fig. 4b gezeigt, der mehrfarbigen figürlichen Darstellung 60 erstellt. Jeder der Farbauszüge 61, 62, 63 entspricht hierbei einer Grundfarbe eines Farbraums, wie zum Beispiel dem RGB-Farbraum (R = Rot; G = Grün; B = Blau) oder dem CMYK-Farbraum (C = Cyan; M = Magenta; Y = Gelb; K = Schwarz). Im RGB-Farbraum stellen die Farben Rot, Grün und Blau die Grundfarben dar. Zur Erstellung der Farbauszüge 61, 62, 63 ist es beispielsweise möglich, durch Ausblenden von jeweils zwei Grundfarben die figürliche Darstellung 60 in einer einzigen Grundfarbe zu erhalten. Werden so beispielsweise mittels geeigneter Software die Grundfarben Rot und Grün ausgeblendet, so verbleibt für die mehrfarbige figürliche Darstellung 60 lediglich die Grundfarbe Blau. Der Farbton und die Helligkeit der Farbauszüge 61, 62, 63 wird in den einzelnen Bereichen der Farbauszüge 61, 62, 63 mittels Halbtonrastertechniken, wie beispielsweise Punktrastern, Linienrastern oder Fehlerdiffusion *(engl.* Diffusion Dithering), berechnet. Mit derartigen Farbauszügen 61, 62, 63 werden nun Rastermasken 64, 65, 66, wie in Fig. 4c gezeigt erstellt. Die Rastermasken 64, 65, 66 weisen hierbei Rasterparameter, insbesondere Rasterwinkel und/oder Rasterweite, auf, welche sich zwischen den Rastermasken 64, 65, 66 unterscheiden und je einer Farbe des RBG-Farbraums entsprechen. Anschließend wird eine Photoresistplatte mittels der registriert ausgerichteten Rastermasken 64, 65, 66 belichtet. Vorzugsweise wird die Belichtung mit den einzelnen Rastermasken 64, 65, 66 nacheinander ausgeführt. Die registergenaue Anordnung der Rastermasken 64, 65, 66 ist für eine optimale Überlagerung der drei Grundfarben im herzustellenden Sicherheitselement entscheidend. Die belichtete Photoresistplatte wird anschließend entwickelt, um das gewünschte resultierende Oberflächenrelief zu erhalten.

Weiter es möglich, dass die Belichtung der Photoresistplatte mittels einer Gitterbelichtung oder Schlitzbelichtung unter Verwendung von einem oder mehreren Zwischenmaster erfolgt.

Vorzugsweise wird mittels der entwickelten Photoresistplatte eine Prägematrize hergestellt, und mithilfe der Prägematrize das Sicherheitselement erzeugt. Hierzu wird in eine Schicht des Sicherheitselements, bevorzugt eine Lackschicht wie eine Replizierlackschicht, eine Mikrostruktur abgeprägt.

Die Replizierlackschicht besteht beispielsweise aus einem thermoplastischen Lack, in den mittels Hitze und Druck durch Einwirkung eines Prägewerkzeugs ein Oberflächenrelief abgeformt ist. Weiter ist es auch möglich, dass die Replizierlackschicht von einem UV-vernetzbaren Lack gebildet wird und das Oberflächenrelief mittels UV-Replikation in die Replizierlackschicht abgeformt wird. Dabei wird das Oberflächenrelief durch Einwirkung eines Prägewerkzeugs auf die ungehärtete Replizierlackschicht abgeformt und die Replizierlackschicht unmittelbar während oder nach der Abformung durch Bestrahlung mit UV-Licht gehärtet. Auch sogenannte Hybridlacksysteme sind möglich, die eine Kombination aus thermoplastischem Lack und UV-vernetzbarem Lack darstellen.

Die Replizierlackschicht besitzt vorzugsweise eine Schichtdicke zwischen 0,1 µm und 20 µm.

Weiter ist es möglich, dass das Oberflächenrelief in ein oder mehreren Zonen der Schicht des Sicherheitselements abgeprägt wird.

Bevorzugt weist die zur Belichtung vorgesehene Photoresistplatte einen positiv arbeitenden Photoresist, insbesondere einen Photoresist der Shipley Microposit S1800 Serie und eine spezielle lichtempfindliche Komponente auf. Weiter es möglich, dass die Photoresistplatte einen negativ arbeitenden Photoresist aufweist.

Die zur Belichtung vorgesehene Photoresistplatte wird bevorzugt dadurch hergestellt, dass der Photoresist bei einer Temperatur von 15°C bis 30°C und einer relativen Luftfeuchte von 50% bis 90% auf eine Platte aufgetragen wird. Bevorzugt wird der Photoresist mittels Schleuderbeschichtung auf eine Platte aufgetragen.

Die Belichtung der Photoresistplatte erfolgt bevorzugt mit Licht, dessen Wellenlänge zwischen 200 nm und 500 nm liegt.

Fig. 5a bis Fig. 5c zeigen schematisch Verfahrensschritte zur Herstellung eines Sicherheitselements. Bezüglich der Verfahrensschritte ist hier auf die Fig. 4a bis Fig. 4c verwiesen. Die mehrfarbige figürliche Darstellung 60 in Fig. 5a ist als Portrait ausgeführt. Bei dem Portrait handelt es sich um eine ursprünglich schwarz-weiß Fotographie, welche anschließend mehrfarbig eingefärbt wurde. Eine geeignete Software zur mehrfarbigen Einfärbung ist beispielsweise AKVIS Coloriage der Firma AKVIS, Perm, Russische Föderation. Ausgehend von der nachkolorierten figürlichen Darstellung 60 in Form des Portraits wird wie bereits im Rahmen der Fig. 4a bis Fig. 4c erläutert die in Fig. 5b gezeigten Farbauszüge 61, 62, 63 und die in Fig. 5c gezeigten Rastermasken 64, 65, 66 erstellt.

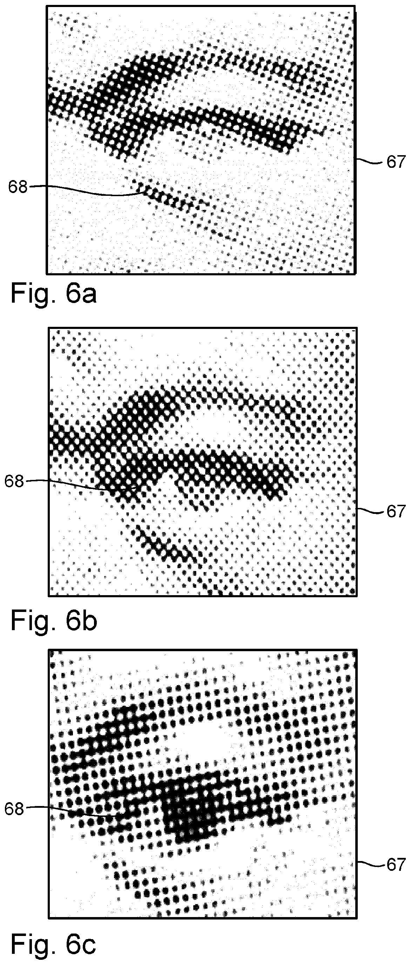

Fig. 6a bis Fig. 6c zeigen vergrößerte Ausschnitte 67 der Rastermasken 64, 65, 66 der Fig. 5c. So zeigt Fig. 6a den vergrößerten Ausschnitt 67 der Rastermaske 64 im Bereich des Auges des Portraits. Der Rasterwinkel der Rastermaske 64 beträgt wie in Fig. 6a gezeigt 66°. Die Rastermaske 64 entspricht der Grundfarbe Blau des RGB-Farbraums. Fig. 6b zeigt den vergrößerten Ausschnitt 67 der Rastermaske 65 im Bereich des Auges des Portraits. Der Rasterwinkel der Rastermaske 65 beträgt wie in Fig. 6b gezeigt 42°. Die Rastermaske 65 entspricht der Grundfarbe Grün des RGB-Farbraums. Fig. 6c zeigt weiter den vergrößerten Ausschnitt 67 der Rastermaske 66 im Bereich des Auges des Portraits. Der Rasterwinkel der Rastermaske 66 beträgt wie in Fig. 6c gezeigt 10°. Die Rastermaske 66 entspricht der Grundfarbe Rot des RGB-Farbraums. Wie in Fig. 6a bis Fig. 6c gezeigt und bereits erläutert unterscheiden sich die Punktraster 68 der Rastermasken 64, 65, 66 beispielsweise in den entsprechenden Rasterwinkeln. Hierbei ist es von Vorteil die Rasterparameter, insbesondere Rasterwinkel, Rasterweite und/oder Auflösung, der Rastermasken 64, 65, 66 derart zu wählen, dass ein unerwünschter Moire-Effekt vermieden wird.

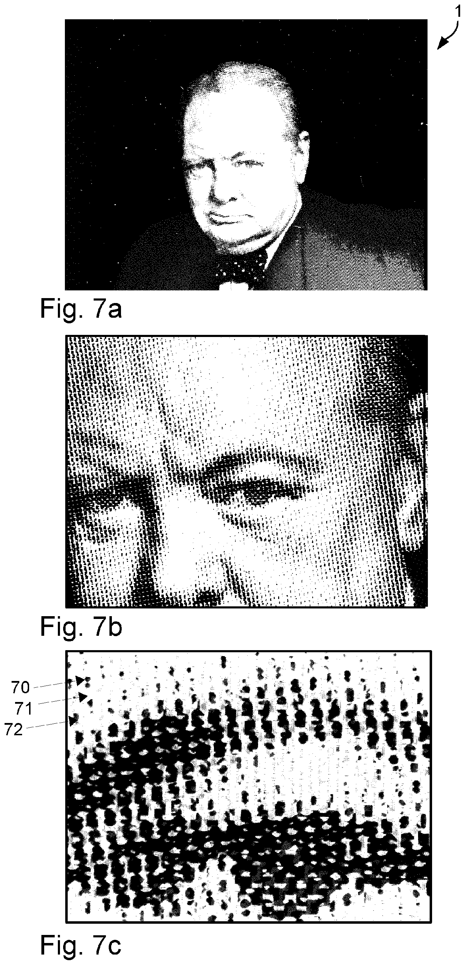

Fig. 7a bis Fig. 7c zeigen schematische Draufsichten auf ein Sicherheitselement 1. Das Sicherheitselement 1 wurde mittels der Rastermasken 64, 65, 66 und anschließender Prägung mittels einer Prägematrize in eine Schicht des Sicherheitselements 1 wie bereits erläutert erzeugt. Das Sicherheitselement 1 zeigt, wie in Fig. 7a dargestellt, ein mehrfarbiges Portrait, welches die Grundfarben Rot, Grün und Blau umfasst. Das Sicherheitselement erscheint somit für einen Betrachter in Echtfarben. Fig. 7b zeigt einen vergrößerten Bereich des Sicherheitselements 1 der Fig. 7a. Wie in Fig. 7b zu erkennen ist, weist das Sicherheitselement 1 eine Punktrasterung auf, welche durch die Überlagerung der drei Belichtungen der Rastermasken 64, 65, 66 entsteht. Fig. 7c zeigt eine weitere Vergrößerung eines Bereichs des Sicherheitselements 1 der Fig. 7a. Wie bereits erläutert, ist die holographische Überlagerung der drei Belichtungen mit jeweiligen Punktmuster 70, 71, 72 zu erkennen.

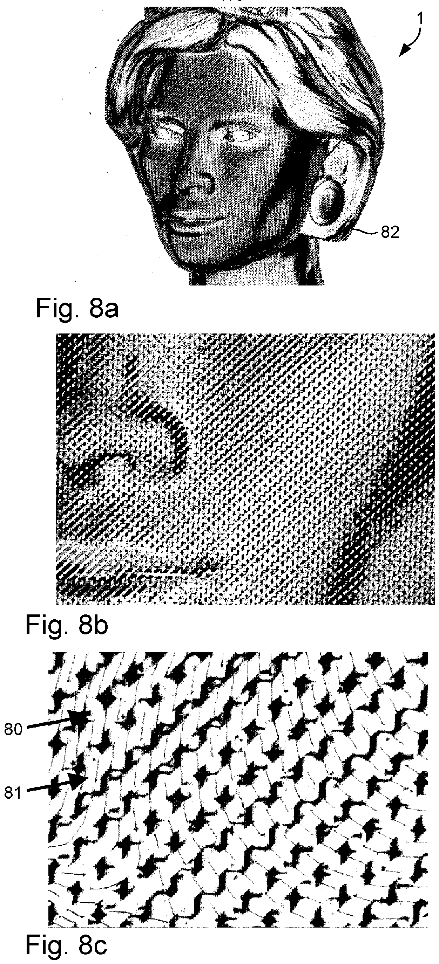

Fig. 8a bis Fig. 8c zeigen schematische Draufsichten auf ein Sicherheitselement 1. Das Sicherheitselement 1 der Fig. 8a bis Fig. 8b weist in den Zonen 81 eine erste Mikrostruktur auf, wobei die erste Mikrostruktur derart ausgeformt ist, dass die erste Mikrostruktur für einen Betrachter eine erste optische Wahrnehmung erreicht, welche einer räumlichen bzw. dreidimensionalen Wahrnehmung eines Objekts 82 entspricht. Das Objekt 82 ist hier als Portrait ausgeführt. Weiter weist das Sicherheitselement 1 in den Zonen 80 eine zweite Mikrostruktur auf, wobei die zweite Mikrostruktur derart ausgeformt ist, dass die zweite Mikrostruktur für den Betrachter eine zweite optische Wahrnehmung erreicht, welche einer mehrfarbigen Darstellung des Objekts 82, insbesondere in Echtfarben, entspricht. Die erste optische Wahrnehmung und die zweite optische Wahrnehmung des Objekts 82 sind hierbei für den Betrachter gleichzeitig wahrnehmbar. Für den Betrachter sind somit zwei diffraktive optische Effekte sichtbar, wobei der erste diffraktive optische Effekt von der ersten Mikrostruktur in den Zonen 81 erreicht wird und der zweite diffraktive optische Effekt von der zweiten Mikrostruktur in den Zonen 80 erreicht wird.

Fig. 8b zeigt einen vergrößerten Ausschnitt der Fig. 8a und Fig. 8c zeigt eine weitere Vergrößerung eines Ausschnitts der Fig. 8b.

Die erste Mikrostruktur in den Zonen 81 der Fig. 8c ist hier eine Mikrostruktur, welche gemäß dem Verfahren das in den Fig. 2a bis 2f beschrieben ist, herstellt wurde. Die Zonen 81, welche die erste Mikrostruktur aufweisen, sind gemäß einem Linienraster mit einer Linienbreite von 40 µm und einer Rasterweite von 80 µm angeordnet. Die erste Mikrostruktur in den Zonen 81 erzeugt somit für den Betrachter einen räumlichen bzw. dreidimensionalen Eindruck des Objekts 82. Die erste Mikrostruktur in den Zonen 81 wird beispielsweise mittels des oben erläuterten "Direkt-Schreib"-Verfahrens in eine Schicht des Sicherheitselements 1 eingebracht.

Die zweite Mikrostruktur in den Zonen 80 ist hier eine Mikrostruktur, welche den Mikrostrukturen gemäß den Fig. 4 bis Fig. 7 entspricht. Die Zonen 80, welche die zweite Mikrostruktur aufweisen, sind gemäß einem Linienraster mit einer Linienbreite von 40 µm und einer Rasterweite von 80 µm angeordnet. Die zweite Mikrostruktur in den Zonen 80 erzeugt somit für den Betrachter eine mehrfarbige Darstellung des Objekts 82, insbesondere in Echtfarben. Die zweite Mikrostruktur in den Zonen 80 wird beispielsweise mittels eine entsprechend ausgeformten Prägematrize in eine Schicht des Sicherheitselements 1 abgeprägt.

Die Zonen 80 und 81 sind mittels sogenanntem Interlacing (Linienbreite 40 µm, Rasterweite 80 µm) ineinandergerastert, d.h. es liegt jeweils eine Zone 80 und eine Zone 81 benachbart zueinander und jeweils abwechselnd vor. Durch das Interlacing der zwei hoch aufgelösten Zonen 80, 81, deren Rasterweite jeweils unterhalb des Auflösungsvermögens des unbewaffneten menschlichen Auges liegt, können die optischen Effekte beider Zonen 80, 81 entsprechend gleichzeitig und kombiniert wahrgenommen werden, sodass in Kombination ein räumlicher bzw. dreidimensionaler Eindruck in Echtfarben des in Fig. 8a erkennbaren Portraits erreicht werden kann. Diese Kombination ist dem natürlichen Eindruck einer real plastischen Wiedergabe so stark angenähert, dass ein menschlicher Betrachter den optischen Effekt als sehr realistisch empfinden kann.

Die Flächenbelegung der Zonen 81, welche die erste Mikrostruktur aufweisen, an der Gesamtfläche aus den Zonen 80 und 81, welche das Objekt 82 bilden, beträgt in den Fig. 8a bis Fig. 8c 50%. Es ist jedoch auch möglich, dass der Anteil der Zonen 81 an der Gesamtfläche aus den Zonen 80 und 81 zwischen 10% und 90% beträgt. Der Anteil der Zonen 80 an der Gesamtfläche aus den Zonen 80 und 81 beträgt dann entsprechend zwischen 90% und 10%.

Weiter ist es möglich, dass die Rasterweite, insbesondere innerhalb eines vordefinierten Variationsbereichs variiert ist.

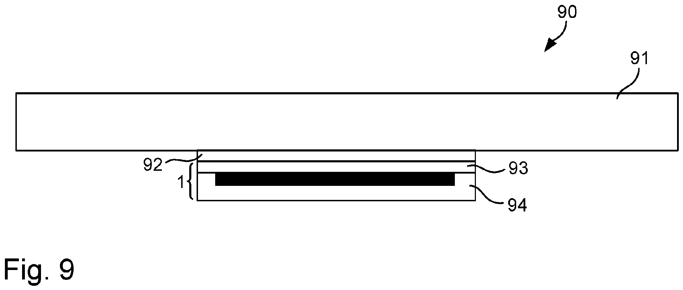

Fig. 9 zeigt eine Transferfolie 90. Es hat sich bewährt, wenn das Sicherheitselement 1 auf einer Transferfolie 90 bereitgestellt wird, so dass eine Applikation des Sicherheitselements 1 auf ein Sicherheitsdokument 2 mittels Prägens erfolgen kann. Eine solche Transferfolie 90 weist mindestens ein erfindungsgemäßes Sicherheitselement 1 auf, wobei das mindestens eine Sicherheitselement 1 auf einer Trägerfolie 91 der Transferfolie 90 angeordnet ist und von dieser ablösbar ist.

Ausgehend von der Trägerfolie 91 der Transferfolie 3 ist hier üblicherweise eine Ablöseschicht 92 vorhanden, um das Sicherheitselement 1 nach dem Prägen von der Trägerfolie 91 lösen zu können. Auf einer der Trägerfolie 91 abgewandten Seite der Ablöseschicht 92 ist vorzugsweise die als Schutzlackschicht ausgebildete optionale transparente Schutzschicht 93 und weiterhin die übrigen Schichten des Sicherheitselements 1 vorhanden.

Es ist ebenso möglich, dass das Sicherheitselement 1 in Form einer Laminierfolie appliziert wird, wobei die Trägerfolie 91 auf dem Sicherheitselement 1 verbleibt und dabei auch keine Ablöseschicht 92 zwischen der Trägerfolie 91 und dem Sicherheitselement 1 vorgesehen ist.

Das Sicherheitselement 1 kann weiter eine Klebstoffschicht 94, insbesondere aus einem Kalt- oder Heißkleber, aufweisen.

### Bezugszeichenliste

- 1: Sicherheitselement
- 2: Sicherheitsdokument
- 3: geometrische Figur
- 4: Sicherheitsfaden
- 5: Beobachter
- 6, 7, 8: Koordinatenachsen x, y, z
- 20: zweidimensionales Bild
- 21: dreidimensionales Objekt
- 22: Betrachter
- 23: optische Wahrnehmung
- 30: Kugelprofil
- 31, 43, 53: Strukturhöhe
- 32: Referenzfläche
- 35: einfallendes Licht
- 36: Richtungen
- 37: Oberflächenprofil
- 34, 35: Materialschichten
- 40: Mikrostruktur mit kontinuierlichem Oberflächenrelief
- 41, 42: Flanken
- 44: Mikrostruktur
- 45, 46: Schichten
- 40: Mikrostruktur mit binärem Oberflächenrelief
- 51: Gitterstege
- 52: Gitterfurchen
- 60: figürliche Darstellung
- 61, 62, 63: Farbauszug
- 64, 65, 66: Rastermaske
- 67: Ausschnitt
- 68: Punktraster
- 80, 81: Zonen
- 82: Objekt
- 90: Transferfolie
- 91: Trägerfolie
- 92: Ablöseschicht
- 93: Schutzschicht
- 94: Klebstoffschicht

## Patentansprüche

1. Verfahren zur Herstellung eines Sicherheitselements (1),
**dadurch gekennzeichnet,**
**dass** das Verfahren folgende Schritte umfasst:
a) Erfassen eines dreidimensionalen Objekts (21);
b) Bestimmen eines durch eine Funktion F(x,y) beschriebenen Oberflächenprofils (37) des dreidimensionalen Objekts, wobei die Funktion F(x,y) den Abstand zwischen dem Oberflächenprofil (37) und einer von Koordinatenachsen x und y aufgespannten zweidimensionalen Referenzfläche (32) an den Koordinatenpunkten x und y beschreibt;
c) Bestimmen einer ersten Mikrostruktur (44) derart, dass die Strukturhöhe (43, 53) der ersten Mikrostruktur (44) auf einen vorbestimmten Wert kleiner als der maximale Abstand (31) zwischen dem Oberflächenprofil (37) und der zweidimensionalen Referenzfläche (32) begrenzt wird und dass durch die erste Mikrostruktur (44) für einen Betrachter eine erste optische Wahrnehmung erreicht wird, welche dem von der Funktion F(x,y) beschriebenen Oberflächenprofil (37) des dreidimensionalen Objekts entspricht;
d) Einbringen der ersten Mikrostruktur (44) in eine Schicht des Sicherheitselements (1), insbesondere mittels lithographischer Verfahren, derart dass von der ersten Mikrostruktur (44) der Schicht des Sicherheitselements (1) für den Betrachter die erste optische Wahrnehmung bereitgestellt wird.

2. Verfahren nach Anspruch 1,
**dadurch gekennzeichnet,**
**dass** der Schritt a) des Erfassens des dreidimensionalen Objekts das Erstellen eines virtuellen dreidimensionalen Objekts und/oder das Erfassen eines realen dreidimensionalen Objekts mittels einer Erfassungseinrichtung, insbesondere eines taktilen Profilometers und/oder eines Laserscanners, umfasst, wobei bevorzugt die Ortsauflösung der Erfassungseinrichtung mindestens dem 1,5-fachen, bevorzugt dem 2-fachen, weiter bevorzugt dem 2,5-fachen, der kleinsten darzustellenden Struktur des durch die Funktion F(x,y) beschriebenen Oberflächenprofils (37) des dreidimensionalen Objekts entspricht.

3. Verfahren nach einem der vorhergehenden Ansprüche,
**dadurch gekennzeichnet,**
**dass** in dem Schritt c) als erste Mikrostruktur (44) eine Mikrostruktur mit einem binären Oberflächenrelief (50), einem mehrstufigen Oberflächenrelief und/oder einem kontinuierlichen Oberflächenrelief (40) bestimmt wird und/oder dass die Strukturhöhe (53) der ersten Mikrostruktur (44) im Wesentlichen konstant über die gesamte Fläche der ersten Mikrostruktur (44) zur Ausbildung eines binären Oberflächenreliefs (50) gewählt wird und dass die Breite der Gitterfurchen (52) und/oder der Gitterstege (51) des binären Oberflächenreliefs (50) der ersten Mikrostruktur derart gewählt werden, dass für den Betrachter die erste optische Wahrnehmung erreicht wird und/oder dass die erste Mikrostruktur zur Ausbildung eines kontinuierlichen Oberflächenreliefs derart gestaltet wird, dass die jeweils einen Flanken (41) der Gitterfurchen des kontinuierlichen Oberflächenreliefs (40) der ersten Mikrostruktur parallel zueinander und im Wesentlichen parallel zur einer Senkrechten auf die zweidimensionalen Referenzfläche (32) verlaufen, dass die jeweils anderen Flanken (42) der Gitterfurchen zumindest bereichsweise parallel zu dem von der Funktion F(x,y) beschriebenen Oberflächenprofil (37) des dreidimensionalen Objekts verlaufen und/oder dass zur Ausbildung des kontinuierlichen Oberflächenreliefs der ersten Mikrostruktur (40) die erste Mikrostruktur (44) derart gestaltet wird, dass die erste Mikrostruktur (44) gleich dem Ergebnis aus der von der Funktion F(x,y) beschriebenen Oberflächenprofil (37) modulo des vorbestimmten Werts der Strukturhöhe (43) der ersten Mikrostruktur ist, wobei bevorzugt die zumindest bereichsweise parallel zu dem von der Funktion F(x,y) beschriebenen Oberflächenprofil (37) des dreidimensionalen Objekts verlaufenden jeweils anderen Flanken (42) der Gitterfurchen derart stufenförmig angenährt werden, dass die Höhe der stufenförmigen Annäherungen zwischen vorbestimmten Koordinatenpunkten x und y der zweidimensionalen Referenzfläche (32) konstant ist und dem Wert an den jeweiligen Koordinatenpunkten x und y der ersten Mikrostruktur mit dem kontinuierlichen Oberflächenrelief (40) entsprechen.

4. Sicherheitselement (1) zur Kennzeichnung eines Sicherheitsdokuments (2), insbesondere einer Banknote, eines Ausweisdokuments, eines Visums, eines Wertpapiers oder einer Kreditkarte,
wobei eine Schicht des Sicherheitselement (1) eine erste Mikrostruktur (44) umfasst,
**dadurch gekennzeichnet,**
**dass** die Strukturhöhe (43, 53) der ersten Mikrostruktur (44) auf einen vorbestimmten Wert kleiner als der maximale Abstand (31) zwischen einem von einer Funktion F(x,y) beschriebenen Oberflächenprofil (37) eines dreidimensionalen Objekts und einer von Koordinatenachsen x und y aufgespannten zweidimensionalen Referenzfläche (32) begrenzt wird, wobei die Funktion F(x,y) den Abstand zwischen dem Oberflächenprofil (37) und der zweidimensionalen Referenzfläche (32) an den Koordinatenpunkten x und y beschreibt, und dass die erste Mikrostruktur (44) für einen Betrachter eine erste optische Wahrnehmung erreicht, welche dem von der Funktion F(x,y) beschriebenen Oberflächenprofil (37) des dreidimensionalen Objekts entspricht.

5. Sicherheitselement (1) nach Anspruch 4,
**dadurch gekennzeichnet,**
**dass** die erste Mikrostruktur (44) ein binäres Oberflächenrelief (50), ein mehrstufiges Oberflächenrelief oder ein kontinuierliches Oberflächenrelief (40) aufweist und/oder dass zumindest einer der Parameter Azimutwinkel, Gitterperiode oder Gittertiefe der ersten Mikrostruktur (44) pseudo-zufällig innerhalb eines vordefinierten Variationsbereichs variiert ist, wobei bevorzugt die Differenz der maximalen Gittertiefe der ersten Mikrostruktur (44) und der minimalen Gittertiefe der ersten Mikrostruktur (44), zwischen denen die Gittertiefe pseudo-zufällig variiert, zwischen 0,1 µm und 10 µm, bevorzugt zwischen 0,25 µm und 2,5 µm beträgt.

6. Sicherheitselement (1) nach einem der Ansprüche 4 oder 5,
**dadurch gekennzeichnet,**
**dass** die die erste Mikrostruktur (44) umfassende Schicht des Sicherheitselements eine Reflexionsschicht, insbesondere eine Metallschicht und/oder eine HRI oder LRI-Schicht, umfasst und/oder dass das von der Funktion F(x,y) beschriebene Oberflächenprofil (37) ein oder mehrere alphanumerische Zeichen, geometrische Figuren, Portraits und/oder sonstige Objekte oder Motive umfasst und/oder dass die Funktion F(x,y) eine bereichsweise stetige, bereichsweise differenzierbare Funktion ist und/oder dass die erste Mikrostruktur (44) eine Ablenkung von einfallendem Licht (35) in dieselben Richtungen bewirkt, in die das von der Funktion F(x,y) beschriebene Oberflächenprofil (37) einfallendes Licht (35) ablenkt.

7. Sicherheitselement (1) nach einem der Ansprüche 4 bis 6,
**dadurch gekennzeichnet,**
**dass** die mehrfarbige Darstellung des ersten Objekts (82) mindestens zwei unterschiedlichen Grundfarben eines Farbraums, insbesondere des RGB-Farbraums, umfasst und/oder dass die zweite Mikrostruktur ein Echtfarbenhologramm und/oder ein Kinegram^{®} ist.

8. Sicherheitselement (1) nach einem der Ansprüche 4 bis 7,
**dadurch gekennzeichnet,**
**dass** die einen oder mehreren ersten Zonen (81) und die einen oder mehreren zweiten Zonen (80) gemäß eines Rasters angeordnet sind.

9. Sicherheitselement (1) nach einem der Ansprüche 4 bis 8,
**dadurch gekennzeichnet,**
**dass** die Rasterweiten kleiner sind als die Auflösungsgrenze des unbewaffneten menschlichen Auges sind, insbesondere dass die Rasterweiten kleiner als 300 µm, bevorzugt kleiner als 200 µm, sind und/oder wobei das Raster ein eindimensionales, von der x- oder der y-Achse aufgespanntes Raster, insbesondere Linienraster, ist oder wobei das Raster ein zweidimensionales, von der x- und der y-Achse aufgespanntes Raster, insbesondere Punktraster, ist.

10. Sicherheitsdokument (2), insbesondere eine Banknote, ein Ausweisdokument, ein Visum, ein Wertpapier oder eine Kreditkarte, mit mindestens einem Sicherheitselement (1) nach einem der Ansprüche 4 bis 9.

11. Transferfolie (90) mit mindestens einem Sicherheitselement (1) nach einem der Ansprüche 4 bis 9, wobei das mindestens eine Sicherheitselement (1) auf einer Trägerfolie (91) der Transferfolie (90) ablösbar angeordnet ist.

12. Laminierfolie mit mindestens einem Sicherheitselement (1) nach einem der Ansprüche 4 bis 9, wobei das mindestens eine Sicherheitselement (1) in die Laminierfolie inkorporiert ist.

## Claims

1. Method for manufacturing a security element (1), **characterised in that**
the method comprises the following steps:
a) recording a three-dimensional object (21);
b) determining a surface profile (37) of the three-dimensional object, which surface profile is described by a function F(x,y), which function F(x,y) describes the distance between the surface profile (37) and a two-dimensional reference plane (32) spanned by coordinate axes x and y at the coordinate points x and y;
c) determining a first microstructure (44) in such a way that the structure height (43, 53) of the first microstructure (44) is limited to a predetermined value smaller than the maximum distance (31) between the surface profile (37) and the two-dimensional reference plane (32), and in such a way that the first microstructure (44) provides an observer with a first optical perception corresponding to the surface profile (37) of the three-dimensional object described by the function F(x,y);
d) introducing the first microstructure (44) into a layer of the security element (1), in particular by means of lithographic methods, in such a way that the observer is provided with the first optical perception by the first microstructure (44) of the layer of the security element (1).

2. Method according to claim 1
**characterised in that**
step a) of recording the three-dimensional object comprises creating a virtual three-dimensional object and/or recording a real three-dimensional object by means of a recording device, in particular a contact profilometer and/or a laser scanner, the spatial resolution of the recording device preferably corresponding to at least 1.5 times, preferably 2 times, more preferably 2.5 times the smallest structure to be represented of the surface profile (37) of the three-dimensional object described by the function F(x,y).

3. Method according to one of the preceding claims **characterised in that**
in step c) a microstructure with a binary surface relief (50), with a multi-stepped surface relief and/or with a continuous surface relief (40) is determined as first microstructure (44), and/or **in that** the structure height (53) of the first microstructure (44) is selected to be substantially constant over the entire area of the first microstructure (44) to form a binary surface relief (50), and **in that** the width of the grating grooves (52) and/or of the grating bars (51) of the binary surface relief (50) of the first microstructure are selected in such a way that the observer is provided with the first optical perception, and/or **in that** the first microstructure, to form a continuous surface relief, is designed such that each of the grating grooves of the continuous surface relief (40) of the first microstructure have one flank (41) running parallel to one another and substantially parallel to a perpendicular to the two-dimensional reference plane (32), the other flanks (42) of the grating grooves run, at least in some regions, parallel to the surface profile (37) of the three-dimensional object described by the function F(x,y), and/or **in that**, to form the continuous surface relief of the first microstructure (40), the first microstructure (44) is designed in such a way that the first microstructure (44) is equal to the result of the surface profile (37) described by the function F(x,y) modulo the predetermined value of the structure height (43) of the first microstructure, the other flanks (42) of the grating grooves running at least in some regions parallel to the surface profile (37) of the three-dimensional object described by the function F(x,y) preferably being approximated in steps in such a way that the height of the stepped approximations is constant between predetermined coordinate points x and y of the two-dimensional reference plane (32) and correspond to the value at the relevant coordinate points x and y of the first microstructure with the continuous surface relief (40) .

4. Security element (1) for labelling a security document (2), in particular a banknote, an identification document, a visa, a security paper or a credit card, one layer of the security element (1) comprising a first microstructure (44),
**characterised in that**
the structure height (43, 53) of the first microstructure (44) is limited to a predetermined value less than the maximum distance (31) between a surface profile (37) of a three-dimensional object described by a function F(x,y) and a two-dimensional reference plane (32) spanned by coordinate axes x and y, the function F(x,y) describing the distance between the surface profile (37) and the two-dimensional reference plane (32) at the coordinate points x and y, and **in that** the first microstructure (44) provides an observer with a first optical perception corresponding to the surface profile (37) of the three-dimensional object described by the function F(x,y).

5. Security element (1) according to claim 4,
**characterised in that**
the first microstructure (44) has a binary surface relief (50), a multi-stepped surface relief, or a continuous surface relief (40), and/or **in that** at least one of the parameters azimuthal angle, grating period or grating depth of the first microstructure (44) is varied pseudo-randomly within a predefined variation range, the difference between the maximum grating depth of the first microstructure (44) and the minimum grating depth of the first microstructure (44), between which the grating depth varies pseudo-randomly, preferably being between 0.1 µm and 10 µm, preferably between 0.25 µm and 2.5 µm.

6. Security element (1) according to one of claims 4 or 5, **characterised in that**
the layer of the security element comprising the first microstructure (44) comprises a reflection layer, in particular a metal layer and/or an HRI or LRI layer, and/or **in that** the surface profile (37) described by the function F(x,y) comprises one or more alphanumerical characters, geometric figures, portraits and/or other objects or motifs, and/or **in that** the function F(x,y) is a function that is continuous in some regions and differentiable in some regions, and/or **in that** the first microstructure (44) causes incident light (35) to be deflected in the same directions as those in which the surface profile (37) described by the function F(x,y) deflects incident light (35).

7. Security element (1) according to one of claims 4 to 6, **characterised in that**
the multi-coloured representation of the first object (82) comprises at least two different primary colours of a colour space, in particular of the RGB colour space, and/or **in that** the second microstructure is a true colour hologram and/or a Kinegram^{®}.

8. Security element (1) according to one of claims 4 to 7, **characterised in that**
the one or more first zones (81) and the one or more second zones (80) are arranged according to a grid.

9. Security element (1) according to one of claims 4 to 8, **characterised in that**
the grid widths are smaller than the resolution limit of the naked human eye, in particular **in that** the grid widths are smaller than 300 µm, preferably smaller than 200 µm, and/or wherein the grid is a one-dimensional grid spanned by the x- or y-axis, in particular a line grid, or wherein the grid is a two-dimensional grid, spanned by the x- and the y-axis, in particular a dot grid.

10. Security document (2), in particular a banknote, an identification document, a visa, a security paper or a credit card, comprising at least one security element (1) according to one of claims 4 to 9.

11. Transfer film (90) comprising at least one security element (1) according to one of claims 4 to 9, wherein the at least one security element (1) is arranged detachably on a carrier film (91) of the transfer film (90) .

12. Laminating film comprising at least one security element (1) according to one of claims 4 to 9, the at least one security element (1) being incorporated in the laminating film.

## Revendications

1. Procédé de fabrication d'un élément de sécurité (1),
**caractérisé en ce**
**que** le procédé comprend des étapes suivantes :
a) de détection d'un objet tridimensionnel (21) ;
b) de définition d'un profil de surface (37), décrit par une fonction F(x,y), de l'objet tridimensionnel, dans lequel la fonction F(x,y) décrit la distance entre le profil de surface (37) et une face de référence bidimensionnelle (32) formée par des axes de coordonnées x et y sur les points de coordonnées x et y ;
c) de définition d'une première microstructure (44) de telle manière que la hauteur de structure (43, 53) de la première microstructure (44) est limitée sur une valeur prédéfinie inférieure à la distance maximale (31) entre le profil de surface (37) et la face de référence bidimensionnelle (32), et qu'est atteinte, par la première microstructure (44) pour un observateur, une première perception optique, laquelle correspond au profil de surface (37), décrit par la fonction F(x,y) de l'objet tridimensionnel ;
d) d'application de la première microstructure (44) dans une couche de l'élément de sécurité (1), en particulier au moyen de procédés lithographiques de telle manière que la première perception optique est fournie par la première microstructure (44) de la couche de l'élément de sécurité (1) pour l'observateur.

2. Procédé selon la revendication 1,
**caractérisé en ce**
**que** l'étape a) de la détection de l'objet tridimensionnel comprend la création d'un objet tridimensionnel virtuel et/ou la détection d'un objet tridimensionnel réel au moyen d'un dispositif de détection, en particulier d'un profilomètre tactile et/ou d'un dispositif scanneur à laser, dans lequel de manière préférée la résolution locale du dispositif de détection correspond au moins à 1,5 fois, de manière préférée à 2 fois, de manière davantage préférée à 2,5 fois, la plus petite structure à représenter du profil de surface (37), décrit par la fonction F(x,y), de l'objet tridimensionnel.

3. Procédé selon l'une quelconque des revendications précédentes,
**caractérisé en ce**
**que** lors de l'étape c), une microstructure avec un relief de surface binaire (50), un relief de surface à paliers multiples et/ou un relief de surface continu (40) est définie en tant que première microstructure (44), et/ou que la hauteur de structure (53) de la première microstructure (44) est choisie de manière sensiblement constante sur la totalité de la face de la première microstructure (44) pour réaliser un relief de surface binaire (50), et que la largeur des rainures de grille (52) et/ou des barreaux de grille (51) du relief de surface binaire (50) de la première microstructure sont choisies de telle manière que la première perception optique est atteinte pour l'observateur, et/ou que la première microstructure est configurée pour réaliser un relief de surface continu de telle manière que les flancs (41) respectivement des rainures de grille du relief de surface continu (40) de la première microstructure s'étendent de manière parallèle les uns par rapport aux autres et de manière sensiblement parallèle par rapport à une perpendiculaire sur la face de référence bidimensionnelle (32), que les autres flancs (42) respectivement des rainures de grille s'étendent au moins par endroits de manière parallèle par rapport au profil de surface (37), décrit par la fonction F(x,y) de l'objet tridimensionnel, et/ou que pour réaliser le relief de surface continu de la première microstructure (40), la première microstructure (44) est configurée de telle manière que la première microstructure (44) est égale au résultat de l'opération modulo entre le profil de surface (37) décrit par la fonction F(x,y) et la valeur prédéfinie de la hauteur de structure (43) de la première microstructure, dans lequel de manière préférée les autres flancs (42) respectivement, s'étendant par endroits de manière parallèle par rapport au profil de surface (37), décrit par la fonction F(x,y), de l'objet tridimensionnel, des rainures de grille sont rapprochés en forme de palier de telle manière que la hauteur des rapprochements en forme de palier entre des points de coordonnées x et y prédéfinis et la face de référence bidimensionnelle (32) est constante et correspond à la valeur sur les points de coordonnées x et y respectifs de la première microstructure avec le relief de surface continu (40).

4. Elément de sécurité (1) pour marquer un document de sécurité (2), en particulier un billet de banque, un document d'identité, un visa, un papier de valeur ou une carte de crédit,
dans lequel une couche de l'élément de sécurité (1) comprend une première microstructure (44),
**caractérisé en ce**
**que** la hauteur de structure (43, 53) de la première microstructure (44) est limitée à une valeur prédéfinie inférieure à la distance maximale (31) entre un profil de surface (37), décrit par une fonction F(x,y), d'un objet tridimensionnel et une face de référence bidimensionnelle (32) formée par des axes de coordonnées x et y, dans lequel la fonction F(x,y) décrit la distance entre le profil de surface (37) et la face de référence bidimensionnelle (32) sur les points de coordonnées x et y, et que la première microstructure (44) atteint pour un observateur une première perception optique, laquelle correspond au profil de surface (37), décrit par la fonction F(x,y), de l'objet tridimensionnel.

5. Elément de sécurité (1) selon la revendication 4,
**caractérisé en ce**
**que** la première microstructure (44) présente un relief de surface binaire (50), un relief de surface à paliers multiples ou un relief de surface continu (40), et/ou qu'au moins un des paramètres, angle azimutal, période de grille ou profondeur de grille, de la première microstructure (44) varie de manière pseudo-aléatoire dans une plage de variation prédéfinie, dans lequel
de manière préférée la différence de la profondeur de grille maximale de la première microstructure (44) et la profondeur de grille minimale de la première microstructure (44), entre lesquelles la profondeur de grille varie de manière pseudo-aléatoire, est comprise entre 0,1 µm et 10 µm, de manière préférée entre 0,25 µm et 2,5 µm.

6. Elément de sécurité (1) selon l'une quelconque des revendications 4 ou 5,
**caractérisé en ce**
**que** la couche, comprenant la première microstructure (44), de l'élément de sécurité comprend une couche réfléchissante, en particulier une couche métallique, et/ou une couche HRI (à indice de réfraction élevé) ou LRI (à faible indice de réfraction), et/ou que le profil de surface (37) décrit par la fonction F(x,y) comprend un ou plusieurs caractères alphanumériques, des figures géométriques, des portraits et/ou d'autres objets ou motifs, et/ou que la fonction F(x,y) est une fonction par endroits permanente, par endroits différenciable, et/ou que la première microstructure (44) entraîne une déviation de lumière incidente (35) dans les mêmes directions, dans lesquelles le profil de surface (37) décrit par la fonction F(x,y) dévie de la lumière incidente (35).

7. Elément de sécurité (1) selon l'une quelconque des revendications 4 à 6,
**caractérisé en ce**
**que** la représentation multicouleur du premier objet (82) comprend au moins deux couleurs de base différentes d'un espace colorimétrique, en particulier de l'espace colorimétrique RJB, et/ou que la deuxième microstructure est un hologramme à couleurs réelles et/ou un Kinegram®.

8. Elément de sécurité (1) selon l'une quelconque des revendications 4 à 7,
**caractérisé en ce**
**que** la ou les plusieurs premières zones (81) et la ou les plusieurs deuxièmes zones (80) sont disposées selon une trame.

9. Elément de sécurité (1) selon l'une quelconque des revendications 4 à 8,
**caractérisé en ce**
**que** les largeurs de trame sont inférieures aux limites de résolution de l'œil humain nu, en particulier que les largeurs de trame sont inférieures à 300 µm, de manière préférée inférieures à 200 µm, et/ou dans lequel la trame est une trame unidimensionnelle formée par l'axe x ou l'axe y, en particulier une trame linéaire, ou dans lequel la trame est une trame bidimensionnelle, formée par l'axe x et l'axe y, en particulier une trame de points.

10. Document de sécurité (2), en particulier billet de banque, un document d'identité, un visa, un papier de valeur ou une carte de crédit, avec au moins un élément de sécurité (1) selon l'une quelconque des revendications 4 à 9.

11. Film de transfert (90) avec au moins un élément de sécurité (1) selon l'une quelconque des revendications 4 à 9, dans lequel l'au moins un élément de sécurité (1) est disposé de manière à pouvoir être détaché sur un film de support (91) du film de transfert (90).

12. Film stratifié avec au moins un élément de sécurité (1) selon l'une quelconque des revendications 4 à 9, dans lequel l'au moins un élément de sécurité (1) est incorporé dans le film stratifié.
